# EUROPÄISCHE PATENTSCHRIFT

(11) **EP 3 469 899 B1**
(45) Veröffentlichungstag und Bekanntmachung des Hinweises auf die Patenterteilung: **16.03.2022**
(21) Anmeldenummer: 18195135.1
(22) Anmeldetag: 18.09.2018
(51) Int. Cl.: A01M 7/00

(54) **LANDWIRTSCHAFTLICHE VERTEILMASCHINE UND VERFAHREN ZUR STEUERUNG EINER DERARTIGEN VERTEILMASCHINE**
AGRICULTURAL DISTRIBUTOR AND METHOD FOR CONTROLLING SUCH A DISTRIBUTOR
MACHINE D'ÉPANDAGE AGRICOLE ET PROCÉDÉ DE COMMANDE D'UNE TELLE MACHINE D'ÉPANDAGE

(30) Priorität: 27.09.2017 DE 102017122421
(43) Veröffentlichungstag der Anmeldung: 17.04.2019
(73) Patentinhaber: HORSCH LEEB Application Systems GmbH, 94405 Landau an der Isar (DE)
(72) Erfinder: LEEB, Theodor, 94562 Oberpöring (DE); ZINK, Florian, 94562 Oberpöring (DE)
(74) Vertreter: Benninger, Johannes

(56) Entgegenhaltungen:
- EP-A1- 2 510 784
- EP-A2- 2 918 157
- EP-B1- 1 716 754
- WO-A1-2012/041743
- US-A1- 2016 243 575

## Beschreibung

Die vorliegende Erfindung betrifft eine landwirtschaftliche Verteilmaschine zum Ausbringen von Flüssigkeiten und/oder körnigen oder granulierten Stoffen mit den Merkmalen des Oberbegriffs des unabhängigen Anspruchs 1. Die Erfindung betrifft zudem ein Verfahren zur Steuerung und/oder Regelung einer Verteilmaschine mit den Merkmalen des Oberbegriffs des unabhängigen Verfahrensanspruchs 15.

In der Landwirtschaft finden verschiedenste Ausführungsformen von Verteilmaschinen zum Ausbringen von unterschiedlichsten Wirkstoffen wie Flüssigkeiten und/oder körnigen oder granulierten Stoffen Verwendung. Häufig werden derartige landwirtschaftliche Verteilmaschinen auch als Feldspritzen bezeichnet. Zur Verteilung der jeweiligen Wirkstoffe besitzen die Verteilmaschinen in der Regel eine sich in Arbeitsposition quer zur Fahrtrichtung erstreckende Verteilvorrichtung. Die Verteilmaschinen können sowohl als selbstfahrende oder auch als an einem Zugfahrzeug angehängte oder angebaute Verteilmaschinen ausgebildet sein. Zudem gibt es darüber hinaus bereits erste Lösungsansätze, um derartige Verteilmaschinen auch als autonome Fahrzeuge bzw. Verteilmaschinen zu bauen. Die Verteilvorrichtungen bzw. die auch als Spritzgestänge bezeichneten Verteilvorrichtungen weisen mitunter große Arbeitsbreiten von zwanzig Meter und mehr auf, wobei derartige Verteilvorrichtungen zumeist in mehrere Gestängesegmente unterteilt sind, die jeweils um aufrechte Achsen schwenkbar zueinander angeordnet sind und somit, u.a. für eine Transportfahrt, um diese aufrechten Achsen in eine für die Transportfahrt maximal zulässige Transportbreite zusammengeklappt werden können.

Eine derartige Verteilmaschine geht bspw. aus der EP 2 829 177 B1 bereits hervor. Die landwirtschaftliche Verteilmaschine dient zum Ausbringen von flüssigen und/oder festen Wirkstoffen und umfasst u.a. eine quer zur Fahrrichtung angeordnete Verteilvorrichtung mit einem Mittelteil und über vertikale bzw. aufrechte Schwenk- und Drehachsen an diesem drehbar gelagerte seitliche Sektionen, wobei die Schwenk- und Drehachsen mit Dämpfungselementen versehen sind und zwischen dem Mittelteil und den seitlichen Sektionen Mittel zur Reduzierung eines Federweges der seitlichen Sektionen angeordnet sind. Um die jeweiligen Dämpfungselemente auf Basis von Fahrbewegungen regeln zu können, ist vorgesehen, dass die Dämpfungselemente in Abhängigkeit von der jeweils aktuellen Bewegungsart der Verteilmaschine über eine Regeleinheit ansteuerbar bzw. regelbar sind. Somit können die ggf. durch vertikale Schwenkbewegungen bzw. durch Gier- und Nickbewegungen hervorgerufenen Beschädigungen der Verteilvorrichtung verhindert werden. Eine kontrollierte Verstellung bzw. Verschwenkung der Verteilvorrichtung oder deren Gestängesegmente, bspw. um Ecken einer Ackerfläche bearbeiten zu können, ist nicht vorgesehen.

Vergleichbare Systeme gehen aus der EP 2 835 050 A1 sowie der EP 2 837 285 A1 hervor. Um vertikale Schwingungen der Verteilvorrichtung zu reduzieren, sind Mittel zur Erfassung dieser Schwingungen vorgesehen. Bei den Mitteln kann es sich insbesondere um ein Kamerasystem handeln. Auf Basis der mittels der Kamera erfassten Hub-, Gier- und Wankbewegungen werden die optimalen Schritte zur Korrektur und Optimierung der Bewegungen der Verteilvorrichtung hergeleitet, wobei hierfür wiederum die Wankbewegungen, insbesondere mittels eines mit elektrischer Energie betriebenen Dämpfersystems, geregelt werden. Auch dieses System sieht keine kontrollierte Verstellung der Verteilvorrichtung, bspw. um Ecken oder Kurven einer Ackerfläche bearbeiten zu können sowie keine Berücksichtigung von Grenzen und Randstrukturen der Ackerfläche vor.

Ein Verfahren zur Korrektur von in einem Speicher eines Arbeitsrechners einer landwirtschaftlichen Verteilmaschine gespeicherter, bspw. mittels eines GPS-Systems aufgezeichneter Positionskoordinaten geht aus der EP 2 983 010 A1 hervor. Das hierin beschriebene Verfahren soll sich durch zwei vorzugsweise senkrecht zueinander orientierte Verschiebeoperationen der gespeicherten Positionskoordinaten relativ zur aktuellen Position auszeichnen, wobei die erste dieser Verschiebeoperationen auf Grund von Lage und/oder Bewegungsrichtungsdaten der Arbeitsmaschine, vorzugsweise bestimmt auf Basis der Fahrtrichtung, vorgenommen wird. Somit kann zwar die aktuelle Positionsbestimmung der Maschine verbessert werden, eine kontrollierte Verstellung der Verteilvorrichtung, bspw. um Ecken oder Spitzen oder Kurven oder dergl. einer Ackerfläche bearbeiten zu können, sieht das Verfahren ebenso nicht vor.

Aus der EP 1 840 690 A2 geht darüber hinaus ein Verfahren zur Erstellung eines Routenplans für eine Gruppe von landwirtschaftlichen Maschinen für die Bearbeitung einer Ackerfläche hervor. Das Routenplanungssystem umfasst hierfür Positionsermittlungseinrichtungen um eine aktuelle Position der betreffenden Verteilmaschinen zu ermitteln, Routenplanungsdaten-Ermittlungseinrichtungen um die notwendigen Routenplanungsdaten zur Verfügung zu stellen, bspw. durch automatische Erfassung der Positionsdaten sowie weiterer Zusatzinformationen und/oder durch Eingabe durch einen Bediener sowie Kommunikationseinrichtungen, um die Routenplanungsdaten zu versenden. Durch das beschriebene Verfahren sollen möglichst viele landwirtschaftliche Maschinen ungehindert gleichzeitig auf einer Ackerfläche arbeiten können. Zudem sieht das Verfahren vor, dass Sicherheitsbereiche definiert werden können, bspw. an Straßenrändern in welchen die landwirtschaftlichen Maschinen nicht fahren können. Derartige Sicherheitsbereiche sind jedoch für eine Verteilung von Pflanzenschutzmitteln nicht akzeptabel, da durch derartige Bereiche somit keine gewünschte gleichmäßige Pflanzenschutzmaßnahme über dem gesamten Pflanzenbestand erreicht wird. Zudem erfolgt die Definition der optimalen Route alleine unter dem Aspekt der Fahrwege bzw. der Fahrspuren der jeweiligen Maschinen, ohne Berücksichtigung einer optimalen ganzflächigen Bearbeitung bzw. Behandlung der landwirtschaftlichen Fläche. Auch finden Ecken und Randstrukturen der landwirtschaftlichen Fläche keine Berücksichtigung zur Ansteuerung von Verteilvorrichtungen oder Arbeitsvorrichtungen der landwirtschaftlichen Maschinen.

Eine Verteilmaschine mit einem verbesserten System zur Teilbreitensteuerung geht aus der EP 2 918 157 B1 hervor. Um Doppelbehandlungen bei Kurvenfahrten oder am Vorgewende zu vermeiden, sieht das System einen Winkelsensor vor, der den Winkel zwischen einem Zugfahrzeug und der Verteilvorrichtung messen kann. Zudem umfasst die Verteilmaschine einen Positionssensor, der die Position eines Zugfahrzeuges der Verteilmaschine bzw. die Position der Verteilmaschine messen kann und somit die Teilbreiten der Verteilvorrichtung in Abhängigkeit der Position und des Winkels jeweils entsprechend geschalten werden. Eine aktive Veränderung der Position bzw. des Winkels der Verteilvorrichtung in Bezug auf die Verteilmaschine, um bspw. bestimmte Ackerbereiche bearbeiten zu können, sieht das System nicht vor.

Darüber hinaus zeigt die EP 1 716 754 B1 eine landwirtschaftliche Verteilmaschine mit einem Rahmen und einem auf dem Rahmen angeordneten Vorratsbehälter sowie mit einer an dem Rahmen mittels einer Aufhängevorrichtung angeordneten Verteilvorrichtung, welche um eine aufrechte Achse gegenüber dem Rahmen verschwenkbar aufgehängt ist, wobei zwischen dem Rahmen und der Verteilvorrichtung zumindest ein von vorzugsweise einer elektronischen Regeleinrichtung ansteuerbares motorisches Stellglied zum Verstellen des Verteilergestänges um die aufrechte Achse vorgesehen ist, sowie dass Mittel vorhanden sind, mittels denen die Verteilvorrichtung mittels des Stellglieds stets rechtwinklig zur Sollrichtung bzw. zur Fahrspur der Verteilmaschine ausgerichtet wird, d.h. dass insbesondere auch bei einer Kurvenfahrt die Verteilvorrichtung stets rechtwinkelig zum Rahmen bzw. zur Fahrtrichtung der Verteilmaschine ausgerichtet ist, wodurch es nicht möglich ist, Ecken oder Spitzen oder von der Fahrspur abweichende Kurven oder dergl. einer Ackerfläche auch zu behandeln. Zudem wird jeweils die gesamte Verteilvorrichtung entsprechend verschwenkt, was wiederum zu fehlerbehafteten Behandlungen führen kann. Auch erfolgt hierbei das Verschwenken der Verteilvorrichtung einzig auf Basis der erfassten Position bzw. der jeweiligen Sollrichtung, wodurch die Verteilvorrichtung mitunter schnell verschwenkt wird. Hierdurch kann es jedoch wiederum zu Fehlbehandlungen kommen, da durch die Verschwenkung der gesamten Verteilvorrichtung mitunter manche Teilbereiche doppelt und manche Teilbereiche mit zu wenig Wirkstoffen behandelt werden, was zudem durch die unkontrollierte Geschwindigkeit noch weiter verschlechtert wird.

Somit sind aus dem Stand der Technik verschiedenste Systeme bekannt, um insbesondere die Dämpfungseigenschaften einer Verteilvorrichtung zu beeinflussen, sowie um eine Verteilvorrichtung um eine aufrechte Achse zu verschwenken. Auch ist es bekannt, verschiedenste Fahrspuren zu definieren, entlang derer die Verteilmaschinen jeweils geführt werden. Um jedoch eine exakte Bearbeitung bzw. Behandlung einer Ackerfläche zu gewährleisten, ist aber es auch erforderlich, die Ecken, Spitzen, Kurven oder dergl. exakt zu bearbeiten, d.h. dass die komplette Ackerfläche bearbeitet wird und keine Fehlstellen bzw. sog. Spritzfenster vorhanden sind, da an unbehandelten Flächen Unkräuter wachsen können, welche sich wiederum vermehren und zudem sich auf dauerhaft überbehandelten Flächen oder Teilbereichen Resistenzen ausbilden können. Dies ist jedoch insbesondere bei Verteilmaschinen mit Verteilvorrichtungen mit einer großen Arbeitsbreite von 20 Metern und mehr nicht ohne weiteres möglich, da es bislang erforderlich war die jeweiligen Ecken durch eine Rückwärtsfahrt auszufahren und anschließend diese zu bearbeiten bzw. zu behandeln oder einzelne Gestängesegmente einzuklappen. Da jedoch bei großen Arbeitsbreiten bereits geringste Lenkwinkelveränderungen zu großen Auslenkungen der Verteilvorrichtung führen ist dies nicht immer ohne weiteres möglich, insbesondere wenn es sich um keine rechtwinkligen Ecken handelt, sondern um stumpfe- oder spitze Winkel oder aber auch wenn die Ackerfläche eine sehr kurvige Feldgrenze aufweist. Um diese exakt zu bearbeiten bzw. zu behandeln, kommt es immer wieder vor, dass durch das jeweilige Rangieren bei der Rückwärtsfahrt der Pflanzenbestand beschädigt wird bzw. viele Pflanzen überfahren werden. Insbesondere ist für das jeweilige Rangieren auch ein großes fahrerisches Geschick einer Bedienperson erforderlich. Auch besteht ein weiteres Problem bei den aus dem Stand der Technik bekannt gewordenen Verteilmaschinen darin, dass diese, wenn sie entlang einer Fahrspur geführt werden, die Ränder der Ackerfläche nicht mehr exakt bearbeiten können, da die Verteilvorrichtung jeweils auf Basis der Ausrichtung der Verteilmaschine verschwenkt wird, wobei die Ausrichtung der Verteilmaschine jedoch abweichend zu einer Randstruktur der Ackerfläche sein kann.

Der Erfindung liegt somit die Aufgabe zugrunde, eine landwirtschaftliche Verteilmaschine mit einer Verteilvorrichtung mit großer Arbeitsbreite und ein Verfahren zur Steuerung derartiger Verteilmaschinen zu schaffen, mit denen es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln, ohne hierbei den Pflanzenbestand zu beschädigen und gleichzeitig Doppelbehandlungen weitgehend zu vermeiden.

Diese Aufgaben der Erfindung werden durch eine landwirtschaftliche Verteilmaschine zum Ausbringen von Flüssigkeiten und/oder körnigen oder granulierten Stoffen mit den Merkmalen des Anspruchs 1 sowie durch ein Verfahren zur Steuerung und Regelung einer Verteilmaschine mit den Merkmalen im Verfahrensanspruch 15 gelöst. Weitere vorteilhafte Ausgestaltungen und Weiterbildungen der Erfindung sind in den jeweiligen abhängigen Ansprüchen angegeben.

Zur Lösung der genannten Aufgaben schlägt die Erfindung eine landwirtschaftliche Verteilmaschine vor. Die landwirtschaftliche Verteilmaschine kann hierbei als selbstfahrende oder als mittels Zugfahrzeug gezogene oder als eine an einem Zugfahrzeug angebaute Verteilmaschine ausgeführt sein. Bei einer mittels Zugmaschine oder Zugfahrzeug gezogenen Ausführung der landwirtschaftlichen Verteilmaschine kann die Verbindung zwischen der Verteilmaschine und dem Zugfahrzeug mittels einer an sich bekannten Zugvorrichtung bzw. einer Zugdeichsel erfolgen. Auch kann die Verteilmaschine als ein autonomes Fahrzeug ausgeführt sein, bzw. eine autonome Verteilmaschine mit Verteilvorrichtung sein. Die Verteilmaschine umfasst zumindest einen Rahmen zum Tragen der jeweiligen Komponenten, einen oder mehrere Vorratsbehälter zum Mitführen und Bereitstellen des jeweiligen Verteilguts sowie eine sich in einer Arbeitsposition quer zur Fahrtrichtung erstreckende Verteilvorrichtung, an welcher Verteilvorrichtung insbesondere nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmen zwischen der Verteilvorrichtung und dem Rahmen nicht ausgeschlossen ist, sondern sich die Bezeichnung Rahmen gleichermaßen auch auf derartige Ausführungsformen bezieht.

Zudem kann die Verteilvorrichtung in mehrere Gestängesegmente unterteilt sein, bspw. in ein Mittelteil und zwei, vorzugsweise links und rechts am Mittelteil befindlichen, über aufrechte Achsen schwenkbar an diesem angebaute, Seitenteile, wobei auch wiederum die Seitenteile aus mehreren ebenfalls mittels aufrechter Achsen schwenkbar zueinander angeordneter Gestängesegmente zusammengesetzt sein können. Beispielsweise kann sich ein Gestänge einer Verteilmaschine aus insgesamt elf Gestängesegmenten zusammensetzen, welche jeweils um aufrechte Achsen zueinander verschwenkbar sind. Es wäre auch jegliche weitere Anzahl an Gestängesegmenten denkbar.

Zudem kann auch die Verteilvorrichtung bzw. dessen Mittelteil um eine aufrechte Achse schwenkbar am Rahmen bzw. an einem dem Rahmen zugeordneten Parallelogramm oder Linearschlitten oder dergleichen Rahmen angebracht sein, d.h. dass dadurch die gesamte Verteilvorrichtung entsprechend verschwenkt werden könnte. Das Verschwenken der jeweiligen Gestängesegmente bzw. der Verteilvorrichtung um die aufrechten Achsen erfolgt mittels zumindest eines von einer elektronischen Regeleinrichtung ansteuerbaren motorischen Stellglieds. Zudem sind der Verteilvorrichtung und/oder den Gestängesegmenten und/oder den aufrechten Achsen und/oder dem zumindest einen motorischen Stellglied Sensoren derartig zugeordnet, dass diese einen Istwert bzgl. der vorhandenen Ausrichtung bzw. der aktuellen Relativposition erfassen und an eine Regeleinrichtung weiterleiten bzw. ausgeben können. Mittels der Sensoren wird somit bspw. erfasst, welche Winkel die jeweiligen Gestängesegmente zueinander aufweisen oder welchen Winkel die Verteilvorrichtung oder dessen Mittelteil in Bezug auf den Rahmen aufweist.

Zudem kann die Verteilmaschine in einer Ausführungsvariante zumindest ein aus wenigstens zwei Rädern gebildetes Fahrwerk bzw. eine oder mehrere lenkbare Achsen aufweisen, wobei die Räder wiederum über aufrechte Achsen schwenkbar bzw. lenkbar zum Rahmen angeordnet sein können, und wobei zur Lenkung wiederum zumindest ein von einer elektronischen Regeleinrichtung ansteuerbares motorisches Stellglied vorgesehen sein kann. Alternativ können auch wiederum dem Fahrwerk und/oder den aufrechten Achsen und/oder dem zumindest einen motorischen Stellglied zur Lenkung Sensoren derartig zugeordnet sein, dass diese einen Istwert bzgl. der vorhandenen Ausrichtung bzw. der aktuellen Relativposition Erfassen und an eine Regeleinrichtung weiterleiten bzw. ausgeben können.

Wahlweise kann die landwirtschaftliche Verteilmaschine vier Räder umfassen, wobei jeweils zwei gegenüberliegende Räder ein Fahrwerk bzw. eine Achse bilden und wobei zumindest die Räder der vorderen Achse oder nur die Räder der hinteren Achse oder die Räder beider Achsen jeweils bspw. um aufrechte Achsen schwenkbar bzw. lenkbar zum Rahmen angeordnet sind. Die Achsen können zudem an einem die Komponenten der Verteilmaschine tragenden Rahmen montiert sein. Zudem kann die Verteilmaschine einen die Verteilmaschine antreibenden Motor und eine Kabine umfassen.

Auch könnte bei einer Ausführungsvariante der landwirtschaftlichen Verteilmaschine als mittels eines Zugfahrzeuges gezogene Verteilmaschine, diese zur Verbindung mit dem Zugfahrzeug eine Zugvorrichtung bzw. eine Zugdeichsel oder dergl. aufweisen, wobei auch wiederum die Zugvorrichtung um eine aufrechte Achse schwenkbar bzw. lenkbar zum Rahmen angebracht sein kann und ebenso wiederum mittels eines motorischen Stellgliedes eine Position bzw. Ausrichtung der Zugvorrichtung in Bezug auf den Rahmen verändert werden kann, um somit ebenfalls die Verteilmaschine zu lenken. Alternativ können auch wiederum der Zugvorrichtung und/oder den aufrechten Achsen und/oder dem zumindest einen motorischen Stellglied zur Lenkung Sensoren derartig zugeordnet sein, dass diese einen Istwert bzgl. der vorhandenen Ausrichtung bzw. der aktuellen Relativposition Erfassen und an eine Regeleinrichtung weiterleiten bzw. ausgeben können.

Vorzugsweise kann die Verteilvorrichtung um eine in Fahrtrichtung verlaufende Drehachse mittels zumindest eines Antriebselements entsprechend einer Bodenkontur verschwenkt werden, um somit eine möglichst exakte Anpassung an die jeweilige Bodenkontur bzw. den jeweiligen Horizont zu erreichen bzw. um möglichst gleiche Abstände zwischen der Verteilvorrichtung und der Bodenkontur bzw. zu einem Pflanzenbestand zu erreichen.

Mittels der Sensoren wird somit bspw. erfasst, welchen Winkel die jeweiligen Räder und/oder die Zugvorrichtung zum Rahmen bzw. zur Verteilmaschine aufweisen, um somit bspw. eine Auswertung über den aktuellen Lenkwinkel zu erhalten.

Auch kann sowohl eine lenkbare Achse als auch eine lenkbare Zugvorrichtung vorgesehen sein, wobei sowohl die Zugvorrichtung als auch das Fahrwerk bzw. dessen Räder jeweils mittels eines separaten oder mittels eines gemeinsamen Stellglieds verschwenkt bzw. gelenkt werden können.

Um eine landwirtschaftliche Verteilmaschine mit einer Verteilvorrichtung mit großer Arbeitsbreite zu schaffen, mit der es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln ohne hierbei den Pflanzenbestand zu beschädigen und gleichzeitig Doppelbehandlungen weitgehend zu vermeiden, ist vorgesehen, dass zur Erfassung und/oder Auswertung einer vorhandenen Randstruktur der Verteilmaschine zugeordneten und/oder mit einer Regeleinrichtung der Verteilmaschine in Verbindung stehenden Konturermittlungseinrichtungen vorgesehen sind sowie dass zur Erfassung und/oder Auswertung einer Fahrspur der Verteilmaschine zugeordneten und/oder mit einer Regeleinrichtung der Verteilmaschine in Verbindung stehenden Spurermittlungseinrichtungen vorgesehen sind, und wobei eine Ansteuerung der motorischen Stellglieder in Abhängigkeit einer vorhandenen Randstruktur und einer vorhandenen Fahrspur derartig erfolgt, dass die Verteilvorrichtung und/oder deren Gestängesegmente eine zumindest weitgehend parallele und/oder rechtwinkelige Ausrichtung zur Randstruktur aufweisen.

Es sei darauf hingewiesen, dass der Begriff rechtwinkelig bei einer eine Kurve aufweisenden Randstruktur derartig zu verstehen sein kann, dass die Verteilvorrichtung bzw. deren Gestängesegmente der Kurve jeweils zumindest annähernd oder exakt im Lot der Kurve folgen kann.

Durch die erfindungsgemäße Verteilmaschine bzw. durch deren Lenkung und deren Verteilvorrichtung wird mittels des und/oder der Stellglied(er) die Verteilvorrichtung bzw. deren Gestängesegmente jeweils derartig bewegt, dass diese eine zumindest weitgehend parallele und/oder rechtwinkelige Ausrichtung zur erfassten bzw. vorhandenen Randstruktur aufweisen, wodurch jeweils vorhandene Ecken oder Kurven bzw. Randstrukturen mit verschiedensten Winkel entsprechend ganzflächig behandelt werden können und zudem Doppelbehandlungen weitgehend vermieden werden können, sowie dass durch die der Fahrspur folgenden Lenkung ein Überfahren von Pflanzen vermieden wird. Die Fahrspuren können hierbei sowohl bei einer Vorwärtsfahrt als auch bei einer Rückwärtsfahrt entsprechend befahren werden.

Bei den Sensoren zur Erfassung der jeweiligen Ausrichtung bzw. der jeweiligen Relativposition kann es sich insbesondere um Winkelpotentiometer oder Winkelsensoren oder Positionssensoren oder dergl. Sensoren handeln. Auch Linearmesssysteme wären denkbar bzw. einsetzbar. Generell wären somit jegliche Sensoren denkbar, mittels denen eine Ausrichtung erfasst bzw. ermittelt werden kann. Die von den Sensoren erfassten Signale können entsprechend an die Regelungseinrichtung übermittelt werden, wobei die Signale anschließend mittels eines in der Regeleinrichtung hinterlegten Steuerungsprogramms in entsprechende Werte der Relativpositionen umgewandelt werden.

Die Verteilmaschine kann jeweils entlang einer definierbaren bzw. einer definierten Fahrspur geführt werden; d.h. dass bspw. die Räder oder die Zugdeichsel bzw. die Verteilmaschine derartig gelenkt wird, dass diese einer Fahrspur folgt, wodurch wiederum ein Überfahren von Pflanzen verhindert bzw. verringert werden kann. So können zur Erfassung und/oder Auswertung einer Fahrspur der Verteilmaschine zugeordnet und/oder mit einer Regeleinrichtung in Verbindung stehend Spurermittlungseinrichtungen vorgesehen sein. Als Fahrspuren könnten bspw. sog. Fahrgassen verwendet werden, welche mittels zusätzlicher Messmittel erfasst werden können oder deren Daten in der Regeleinrichtung hinterlegt sein können. Auch könnten als Spurermittlungseinrichtungen ein Laserscanner und/oder eine Kamera bzw. ein Kamerasystem und/oder ein Radarsensor vorgesehen sein. Ebenso könnte zur Spurermittlung ein GPS-System an der Verteilmaschine vorgesehen sein. Ebenso wäre es denkbar, dass die jeweiligen Fahrspuren bspw. mittels der Regeleinrichtung aus einer Datenbank ausgelesen werden oder dass die Fahrspur anhand eines ermittelten Kurvenradius mittels eines in der Regeleinrichtung hinterlegten Steuerungsprogramms berechnet wird. Auch könnte eine Kombination der genannten Spurermittlungseinrichtungen verwendet werden, um somit die Fahrspuren noch exakter zu erfassen bzw. zu ermitteln oder auszuwerten.

Auch könnte in einer Weiterbildung der Erfindung vorgesehen sein, dass in Abhängigkeit der erfassten bzw. der vorhandenen Randstruktur und der aktuell ermittelten Ausrichtung der Verteilmaschine bzw. der Verteilvorrichtung oder deren Gestängesegmente mittels einer Anzeigevorrichtung Hinweise über mögliche Korrekturbewegungen der Lenkung der Verteilmaschine ausgegeben und angezeigt werden. Zudem könnte vorgesehen sein, dass die Verteilmaschine die jeweilige Anpassung der Verteilvorrichtung und/oder der Gestängesegmente sowie der jeweiligen Lenkung und der Fahrbewegungen autonom durchführt, insbesondere ohne jeglichen Eingriff durch eine Bedienperson. Insofern die Verteilmaschine an ein Zugfahrzeug angebaut bzw. mit dieser verbunden ist, könnte auch vorgesehen sein, dass das Zugfahrzeug bzw. deren Steuerungseinheit mit der Regeleinrichtung der Verteilmaschine in Verbindung steht und wiederum das Zugfahrzeug bzw. deren Lenkung und/oder deren Antriebseinheit entsprechend autonom bzw. automatisch auf Basis der vorhandenen Randstruktur und der erfassten aktuellen Relativposition jeweils mittels der Regeleinrichtung der Verteilmaschine angesteuert wird. Somit könnten bspw. auch durch eine Bedienperson durchgeführte Lenk- und Antriebsbefehle übersteuert werden.

Zudem könnte vorgesehen sein, dass beispielsweise eine weitere Steuerungseinheit und eine Antriebseinheit der Verteilmaschine angesteuert werden. Somit könnten auch die Fahrbewegungen der Verteilmaschine wiederum in Abhängigkeit der Relativposition und der Randstruktur sowie bspw. auch der Fahrspuren entsprechend gesteuert bzw. geregelt werden. Dadurch kann insbesondere erreicht werden, dass bei einer Verteilmaschine sowohl deren Verteilvorrichtung als auch deren Fahrbewegungen weitgehend autonom und ohne Einwirkung einer Bedienperson durchgeführt werden.

Die erfasste Randstruktur könnte bspw. ein Feldrand bzw. ein Feldende sein oder auch ein Rand des Pflanzenbestands sein, d.h. so könnte der Übergang zu einer andern Pflanzensorte erkannt werden. Beispielsweise kann eine Ackerfläche eine sich aus mehreren Seiten zusammengesetzte Randstruktur aufweisen, welche Randstruktur zudem mehrere Ecken mit verschiedenen Winkel zueinander beinhalten kann. Ebenso wären auch Randstrukturen denkbar, welche Kurven oder welche Ecken und Kurven aufweisen. Auch könnten als Randstruktur Fahrgassen ermittelt werden. Auch Zäune wären als Randstruktur erfassbar bzw. könnten ausgewertet werden. Zudem könnten auch bereits behandelte bzw. bereits bearbeitete Flächen des Pflanzenbestands bzw. der jeweiligen Ackerfläche als Randstruktur erfasst werden. Hierdurch können zudem Überlappungen und Doppelbehandlungen noch weiter vermieden werden. Auch Straßen oder Wege können als Randstruktur erkannt bzw. ausgewertet werden. Ebenso könnten die Randstrukturen jeweils in der Regeleinrichtung hinterlegt sein, bzw. könnte die Regeleinrichtung entsprechende Daten aus einer Datenbank abrufen.

Zur Erfassung und/oder Auswertung der Randstruktur bzw. als Konturermittlungseinrichtung kann bspw. ein GPS-System an der Verteilmaschine vorhanden sein bzw. mit der Regeleinheit in Verbindung stehen. Auch wäre es denkbar, einen oder mehrere Laserscanner zu verwenden. Auch eine oder mehrere Kameras bzw. ein Kamerasystem könnten verwendet werden. Zudem könnten auch Radarsensoren verwendet werden. Auch eine Kombination aus mehreren der vorgenannten Systeme wäre denkbar. So könnte bspw. durch die Kombination aus einem GPS-System mit einem Sensor oder einer Kamera die jeweilige Randstruktur noch exakter erfasst werden.

Es sei hierzu angemerkt, dass der Begriff GPS-System sowohl bei der Ermittlung der Randstruktur als auch der Ermittlung der Fahrspuren als Oberbegriff für jegliches Satelliten basierte System bzw. für jedes beliebige Positionsbestimmungssystem steht. Wenn also jeweils von GPS-System die Rede ist, so sind hierbei ebenso bspw. das russische GLONASS-System oder das europäische GALILEO-System oder das chinesische BEIDOU-System usw. miterfasst.

In einer weiteren Ausführungsform wäre es zudem vorstellbar, dass die jeweilige Randstruktur sowie die Fahrspur auf Basis eines mit bspw. einem an der Verteilmaschine angebrachten Gyroskop ermittelten Kurvenradius und einem in der Regeleinrichtung hinterlegten Steuerungsprogramm ermittelt bzw. berechnet wird. Zudem könnte die jeweilige Randstruktur sowie die jeweilige Fahrspur mittels der Regeleinrichtung aus einer Datenbank abgerufen werden.

Um die jeweilige Position der Verteilvorrichtung bzw. auch dessen Ausrichtung in Bezug auf die Verteilmaschine bzw. den Rahmen noch exakter zu erfassen, könnte zudem die Ausrichtung der Verteilmaschine miterfasst werden, wobei hierfür bspw. zwischen einem Zugfahrzeug und der Verteilmaschine ein Winkelsensor angebracht sein kann. Auch könnten an den Fahrwerken bzw. an den Rädern oder deren Lagerstellen Lenkwinkelsensoren angebracht sein. Auch könnten an der Verteilmaschine Beschleunigungssensoren oder Drehratensensoren oder Gyroskope angebaut sein. Auch eine Kombination der vorgenannten Sensoren wäre denkbar bzw. vorstellbar.

Um eine exakte Ausrichtung der Gestängesegmente bzw. der Verteilvorrichtung zu erreichen, ist in der Regeleinrichtung ein Steuerungsprogramm hinterlegt, welches unter Berücksichtigung der erfassten Istwerte der Ausrichtung bzw. der Relativposition und der erfassten bzw. vorhandenen Randstruktur, eine Berechnung zur Ansteuerung des zumindest einen motorischen Stellglieds erstellt. Mittels des Steuerungsprogramms können hierfür auch entsprechende Verfahrgeschwindigkeiten des Stellgliedes definiert werden. Die Verfahrgeschwindigkeiten könnten zudem unter Berücksichtigung und Verarbeitung von verschiedensten Parametern wie bspw. den aktuellen Fahrbewegungen der Verteilmaschine noch weiter präzisiert werden, d.h. je größer die Fahrgeschwindigkeit der Verteilmaschine ist, desto schneller könnte die Verfahrgeschwindigkeit des zumindest einen motorischen Stellglieds sein.

Bei den Fahrbewegungen kann beispielsweise erfasst werden, ob die Verteilmaschine oder dessen Zugfahrzeug sich vorwärts oder rückwärts bewegt oder mit welcher Geschwindigkeit die Verteilmaschine oder dessen Zugfahrzeug bewegt wird. Auch könnte erfasst werden, ob die Verteilmaschine oder dessen Zugfahrzeug beschleunigt oder verzögert wird.

Die Verfahrgeschwindigkeiten könnten jedoch auch auf Basis von verschiedenen anderen Parametern erfolgen, so dass wiederum durch ein zu schnelles oder zu langsames verschwenken Doppelbehandlungen und/oder Unterbehandlungen vermieden werden können. So kann die Verfahrgeschwindigkeit bspw. auf Basis der Fahrgeschwindigkeit der Verteilmaschine und/oder auf Basis der Ausbringmenge und/oder auf Basis der Wegstrecke und/oder auf Basis der jeweils erfassten Relativpositionen erfolgen. Auch diese Parameter können bspw. wieder mittels verschiedenster Messmittel erfasst und mittels des in der Regeleinrichtung hinterlegten Steuerungsprogramms verarbeitet werden.

Auch wäre es denkbar, dass eine Regelung des oder der motorischen Stellglied(er) durch eine Vorwärtsfahrt deaktiviert und durch eine Rückwärtsfahrt aktiviert wird. Zudem können dem Stellglied Dämpfungsmittel zur Unterbindung von sog. Gier- und Nickbewegungen in Fahrtrichtung zugeordnet sein, wobei diese sowohl bei Vorwärtsfahrt als auch bei Rückwärtsfahrt aktiviert bleiben können. Die Gier- und Nickbewegungen können beispielsweise sensorisch erfasst werden. Hierfür eignen sich bspw. Drehraten-und/oder Beschleunigungssensoren, deren Ausgangssignale entsprechend ausgewertet werden können.

Eine Ansteuerung des oder der Stellglied(er) kann derartig erfolgen, dass die Verteilvorrichtung und/oder deren Gestängesegmente eine zumindest weitgehend parallele Ausrichtung zur vorhandenen Randstruktur aufweisen oder, dass sich die projizierten senkrechten Ebenen der Verteilvorrichtung oder deren Gestängesegmente und der Randstruktur schneiden. Auch können sowohl die parallele Ausrichtung als auch die rechtwinkelige Ausrichtung zur Randstruktur in einem definierbaren Offset erfolgen, so dass eine Regelung entsprechend beschleunigt werden kann, jedoch diese dennoch ausreichend genau ist, um ein gewünschtes Arbeitsergebnis bzw. Verteilergebnis zu erzielen.

In einer Weiterbildung wäre es zudem denkbar, dass in Abhängigkeit der erfassten Ausrichtung der Verteilvorrichtung bzw. deren Gestängesegmente sowie der vorhandenen Randstruktur eine Ansteuerung der Teilbreiten der Verteilvorrichtung erfolgt, so dass eine Doppelbehandlung des Pflanzenbestandes noch weiter verhindert werden kann. Dies bedeutet, dass durch eine Erfassung und/oder Auswertung der Randstrukturen jeweils einzelne oder mehrere Spritzdüsen abgeschaltet werden können. Auch kann vorgesehen sein, dass in Abhängigkeit der erfassten Ausrichtung der Verteilvorrichtung bzw. deren Gestängesegmente in Bezug auf die erfasste bzw. vorhandene Randstruktur, die Ausbringmengen an den Teilbreiten der Verteilvorrichtung erhöht oder verringert werden bzw. dass auch die Ausbringmengen an einzelnen Spritzdüsen entsprechend erhöht oder verringert werden. So dass wiederum eine Überbehandlung verhindert werden kann. Ebenso wäre es denkbar, dass auf Basis der vorhandenen Randstruktur an der Verteilvorrichtung verschiedene Spritzmuster ausgebracht werden, welche Spritzmuster bspw. durch eine Ansteuerung von verschiedenen Spritzdüsen oder durch verschiedene Ausbringmengen erzeugt werden können. Als Teilbreiten können bspw. auch einzelne Gestängesegmente dienen, so dass bspw. in Abhängigkeit der Randstruktur die Spritzdüsen von einzelnen Gestängesegmenten abgeschaltet werden.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt bzw. verschoben werden kann, wobei hierfür die Verteilvorrichtung bspw. mittels eines zusätzlichen Parallelogramms am Rahmen oder an einem dem Rahmen zugeordneten Parallelogramm gelagert sein kann oder bspw. mittels eines quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese, die Verteilvorrichtung und/oder deren Gestängesegmente entsprechend auf Basis dieser Randstruktur verschwenkt werden.

Die motorischen Stellglieder können insbesondere zwischen dem Rahmen und der Verteilvorrichtung oder zwischen dem Rahmen und einem Gestängesegment oder zwischen zwei Gestängesegmenten angebaut sein. Ebenso können die Stellglieder zwischen dem Rahmen und der Zugvorrichtung angebracht sein oder zwischen zwei eine Achse bildenden Räder oder jeweils zwischen einem Rad und dem Rahmen. Generell sind somit verschiedenste Anordnungsmöglichkeiten für die motorischen Stellglieder denkbar. Die Stellglieder können hydraulisch und/oder pneumatisch und/oder elektrisch betrieben werden. Insbesondere können die Stellglieder als Zylinder oder Linearantrieb oder Spindeltrieb oder dergl. ausgeführt sein. Auch können derartige hydraulische oder pneumatische Stellglieder verwendet werden, welche von einer elektrischen Steuerung oder einem elektrisch betätigten Ventil angesteuert werden.

Es sei angemerkt, dass die Begriffe "Regeleinrichtung" und "Steuerungsprogramm" als Oberbegriff für jegliche Art der Einflussnahme auf die Stellglieder verstanden werden, wobei der Begriff "Regeleinrichtung" auch eine "Steuerung" umfasst und umgekehrt, da eine Regelung eine Steuerung mit einer Rückkopplung der gesteuerten Größe ist. Die Regeleinrichtung kann somit auch als Regler, insbesondere zur Regelung der Stellglieder, ausgeführt sein. Zudem kann die Regeleinrichtung oder das Steuerungsprogramm als elektrische oder hydraulische oder pneumatische oder als elektropneumatische oder elektrohydraulische Steuerung ausgeführt sein.

Die jeweils vorhandenen aufrechten Achsen können sowohl senkrecht, als auch diagonal oder schräg im Raum verlaufend sein, wobei diese aber insbesondere jeweils derartig ausgerichtet sind, dass mittels dieser bzw. durch Rotation um diese jeweils horizontale Rotationsbewegungen der an diesen angebrachten Elemente bzw. Baugruppen erzeugt werden.

Gemäß einem Ausführungsbeispiel der Erfindung kann die gesamte Verteilvorrichtung derartig verschwenkt werden, dass diese eine zumindest weitgehend parallele Ausrichtung zur Randstruktur aufweisen. Gemäß einem weiteren Ausführungsbeispiel der Erfindung kann die Verteilvorrichtung bzw. deren Gestängesegmente derartig verschwenkt werden, dass ein Gestängesegment eine weitgehend parallele Ausrichtung zu einer Randstruktur aufweist sowie dass ein Gestängesegment eine weitegehend parallele und rechtwinkelige Ausrichtung zu einer Randstruktur aufweist.

Insbesondere kann die Verteilmaschine jeweils entlang einer definierbaren bzw. einer definierten Fahrspur geführt werden, was bedeutet, dass deren Räder und/oder deren Zugvorrichtung derartig gelenkt werden, dass diese der Fahrspur folgen. Zur Erfassung und/oder Auswertung dieser Fahrspur können der Verteilmaschine Spurermittlungseinrichtungen vorgesehen sein. Beispielsweise könnte eine Ansteuerung der Stellglieder auch derartig erfolgen, dass die Verteilmaschine jeweils den Fahrspuren folgt, wobei die Verteilvorrichtung oder deren Gestängesegmente hingegen jeweils auf Basis der vorhandenen Randstruktur entsprechend verschwenkt werden, so dass die Verteilvorrichtung oder deren Gestängesegmente der Randstruktur parallel und/oder rechtwinkelig folgen. Dies kann insbesondere bei einer Rückwärtsfahrt von Vorteil sein, da somit die Ecken und Kurven oder dergl. jeweils ganzflächig behandelt werden durch die fest definierten bzw. definierbare Fahrspuren jedoch wenig bis keine Pflanzen überfahren werden.

Wenn zuvor die erfindungsgemäße landwirtschaftliche Verteilmaschine beschrieben wurde, so sei an dieser Stelle ausdrücklich betont, dass alle Aspekte und Ausführungsvarianten, die im Zusammenhang mit der Verteilmaschine erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen von der erfindungsgemäßen landwirtschaftlichen Verteilmaschine die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte der landwirtschaftlichen Verteilmaschine sein können.

Zur Lösung der Aufgaben schlägt die Erfindung zudem ein Verfahren zur Steuerung und/oder Regelung einer Verteilmaschine vor. Die landwirtschaftliche Verteilmaschine kann hierbei als selbstfahrende oder als mittels Zugfahrzeug gezogene oder als eine an einem Zugfahrzeug angebaute Verteilmaschine ausgeführt sein. Auch kann die Verteilmaschine als ein autonomes Fahrzeug ausgeführt sein bzw. eine autonome Verteilmaschine mit Verteilvorrichtung sein. Die Verteilmaschine umfasst zumindest einen Rahmen zum Tragen der jeweiligen Komponenten, einen oder mehrere Vorratsbehälter zum Mitführen und Bereitstellen des jeweiligen Verteilguts sowie eine, sich in einer Arbeitsposition quer zur Fahrtrichtung erstreckende Verteilvorrichtung, an welcher Verteilvorrichtung insbesondere nach unten gerichtete Ausbringdüsen zum Ausbringen und Verteilen der jeweiligen Flüssigkeiten und/oder der körnigen oder granulierten Stoffe angebracht sind.

Die Verteilvorrichtung ist beweglich am Rahmen angeordnet, wobei die Verteilvorrichtung hierfür bspw. mittels eines Parallelogramms oder mittels eines Linearschlittens auch in dessen Höhe verstellbar zum Rahmen angebracht aber auch direkt am Rahmen angebaut sein kann. Zum besseren Verständnis wird im nachfolgenden die Anbringung der Verteilvorrichtung jeweils nur auf den Rahmen bezogen, wobei dadurch jedoch eine Verbindung bspw. mittels eines Parallelogramms oder dergl. Zwischenrahmen zwischen der Verteilvorrichtung und dem Rahmen nicht ausgeschlossen ist, sondern sich die Bezeichnung Rahmen gleichermaßen auch auf derartige Ausführungsformen bezieht bzw. auch derartige Ausführungsformen beinhaltet.

Zudem kann die Verteilmaschine in einer Ausführungsvariante zumindest ein aus wenigstens zwei Rädern gebildetes Fahrwerk bzw. eine oder mehrere lenkbare Achsen aufweisen, wobei die Räder wiederum über aufrechte Achsen schwenkbar bzw. lenkbar zum Rahmen angeordnet sein können, und wobei zur Lenkung wiederum zumindest ein von einer elektronischen Regeleinrichtung ansteuerbares motorisches Stellglied vorgesehen sein kann. Hierbei können auch wiederum dem Fahrwerk und/oder den aufrechten Achsen und/oder dem zumindest einen motorischen Stellglied zur Lenkung Sensoren derartig zugeordnet sein, dass diese einen Istwert bzgl. der vorhandenen Ausrichtung bzw. der aktuellen Relativposition Erfassen und an eine Regeleinrichtung weiterleiten bzw. ausgeben können.

Auch könnte bei einer Ausführungsvariante der landwirtschaftlichen Verteilmaschine als mittels eines Zugfahrzeuges gezogene Verteilmaschine, diese zur Verbindung mit dem Zugfahrzeug eine Zugvorrichtung bzw. eine Zugdeichsel oder dergl. aufweisen, wobei auch wiederum die Zugvorrichtung um eine aufrechte Achse schwenkbar bzw. lenkbar zum Rahmen angebracht sein kann und ebenso wiederum mittels eines motorischen Stellgliedes eine Position bzw. Ausrichtung der Zugvorrichtung in Bezug auf den Rahmen verändert werden kann, um somit ebenfalls die Verteilmaschine zu lenken. Alternativ können auch wiederum der Zugvorrichtung und/oder den aufrechten Achsen und/oder dem zumindest einen motorischen Stellglied zur Lenkung Sensoren derartig zugeordnet sein, dass diese einen Istwert bzgl. der vorhandenen Ausrichtung bzw. der aktuellen Relativposition Erfassen und an eine Regeleinrichtung weiterleiten bzw. ausgeben können.

Mittels der Sensoren wird somit bspw. erfasst, welchen Winkel die jeweiligen Räder und/oder die Zugvorrichtung zum Rahmen bzw. zur Verteilmaschine aufweisen, um somit bspw. eine Auswertung über den aktuellen Lenkwinkel zu erhalten.

Auch kann sowohl eine lenkbare Achse als auch eine lenkbare Zugvorrichtung vorgesehen sein, wobei sowohl die Zugvorrichtung als auch das Fahrwerk bzw. dessen Räder jeweils mittels eines separaten oder mittels eines gemeinsamen Stellglied verschwenkt bzw. gelenkt werden können.

Um eine landwirtschaftliche Verteilmaschine mit einer Verteilvorrichtung mit großer Arbeitsbreite zu schaffen, mit der es vereinfacht wird, auch stumpfe oder spitze oder rechte Winkel aufweisende Ecken und kurvenreiche Grenzen bzw. Randstrukturen einer Ackerfläche zu bearbeiten bzw. zu behandeln ohne hierbei den Pflanzenbestand zu beschädigen und gleichzeitig Doppelbehandlungen weitgehend zu vermeiden, ist ein Verfahren vorgesehen, welches zumindest die nachfolgenden Verfahrensschritte in beliebiger Reihenfolge umfasst:
- Erfassung und Weiterleitung eines Istwertes bzgl. der Ausrichtung bzw. der aktuellen Relativposition der Räder und/oder der Zugvorrichtung mittels diesen und/oder den aufrechten Achsen und/oder dem zumindest einen Stellglied zugeordneter Sensoren,
- Erfassung und Weiterleitung eines Istwertes bzgl. der Ausrichtung bzw. der aktuellen Relativposition der Verteilvorrichtung und/oder der Gestängesegmente mittels diesen und/oder den aufrechten Achsen und/oder dem zumindest einen Stellglied zugeordneter Sensoren,
- Erfassung und/oder Auswertung einer Randstruktur mittels der Verteilmaschine zugeordneter und/oder mit der Regeleinrichtung in Verbindung stehender Konturermittlungseinrichtungen,
- Erfassung und/oder Auswertung einer Fahrspur mittels der Verteilmaschine zugeordneter und/oder mit der Regeleinrichtung in Verbindung stehender Spurermittlungseinrichtungen,
- Ansteuerung der motorischen Stellglieder in Abhängigkeit einer vorhandenen Randstruktur und einer vorhandenen Fahrspur derartig, dass die Verteilvorrichtung und/oder deren Gestängesegmente eine zumindest weitgehend parallele und/oder rechtwinkelige Ausrichtung zur Randstruktur aufweisen.

Die erfasste Randstruktur könnte bspw. ein Feldrand bzw. ein Feldende sein oder auch ein Rand des Pflanzenbestands, d.h. so könnte der Übergang zu einer anderen Pflanzensorte erkannt werden. Auch könnten als Randstruktur Fahrgassen ermittelt werden. Auch Zäune wären als Randstruktur erfassbar bzw. könnten ausgewertet werden. Zudem könnten auch bereits behandelte bzw. bereits bearbeitete Flächen des Pflanzenbestands bzw. der jeweiligen Ackerfläche als Randstruktur erfasst werden. Hierdurch können zudem Überlappungen und Doppelbehandlungen noch weiter vermieden werden. Auch Straßen oder Wege können als Randstruktur erkannt bzw. ausgewertet werden. Ebenso könnten die Randstrukturen jeweils in der Regeleinrichtung hinterlegt sein, bzw. könnte die Regeleinrichtung entsprechende Daten aus einer Datenbank abrufen.

Zur Erfassung und/oder Auswertung der Randstruktur bzw. als Konturermittlungseinrichtung kann bspw. ein GPS-System an der Verteilmaschine vorhanden sein bzw. mit der Regeleinheit in Verbindung stehen. Auch wäre es denkbar, einen oder mehrere Laserscanner zu verwenden. Auch eine oder mehrere Kameras bzw. ein Kamerasystem könnten verwendet werden. Zudem könnten auch Radarsensoren verwendet werden. Auch eine Kombination aus mehreren der vorgenannten Systeme wäre denkbar. So könnte bspw. durch die Kombination aus einem GPS-System mit einem Sensor oder einer Kamera die jeweilige Randstruktur noch exakter erfasst werden.

In einer weiteren Ausführungsform wäre es zudem vorstellbar, dass die jeweilige Randstruktur sowie die Fahrspur auf Basis eines, mit bspw. einem an der Verteilmaschine angebrachten Gyroskop, ermittelten Kurvenradius und einem in der Regeleinrichtung hinterlegten Steuerungsprogramm ermittelt bzw. berechnet wird. Zudem könnte die jeweilige Randstruktur sowie die jeweilige Fahrspur mittels der Regeleinrichtung aus einer Datenbank abgerufen werden.

Die Verteilmaschine kann jeweils entlang einer definierbaren bzw. einer definierten Fahrspur geführt werden; d.h. dass bspw. die Räder oder die Zugdeichsel bzw. die Verteilmaschine derartig gelenkt wird, dass diese einer Fahrspur folgt, wodurch wiederum ein Überfahren von Pflanzen verhindert bzw. verringert werden kann. So können zur Erfassung und/oder Auswertung einer Fahrspur der Verteilmaschine zugeordnet und/oder mit einer Regeleinrichtung in Verbindung stehend Spurermittlungseinrichtungen vorgesehen sein. Als Fahrspuren könnten bspw. sog. Fahrgassen verwendet werden, welche mittels zusätzlicher Messmittel erfasst werden können oder deren Daten in der Regeleinrichtung hinterlegt sein können. Auch könnten als Spurermittlungseinrichtungen ein Laserscanner und/oder eine Kamera bzw. ein Kamerasystem und/oder ein Radarsensor vorgesehen sein. Ebenso könnte zur Spurermittlung ein GPS-System an der Verteilmaschine vorgesehen sein. Ebenso wäre es denkbar, dass die jeweiligen Fahrspuren bspw. mittels der Regeleinrichtung aus einer Datenbank ausgelesen werden oder dass die Fahrspur anhand eines ermittelten Kurvenradius mittels eines in der Regeleinrichtung hinterlegten Steuerungsprogramms berechnet wird. Auch könnte eine Kombination der genannten Spurermittlungseinrichtungen verwendet werden, um somit die Fahrspuren noch exakter zu erfassen bzw. zu ermitteln oder auszuwerten.

Auch könnte in einer Weiterbildung der Erfindung vorgesehen sein, dass in Abhängigkeit der erfassten bzw. der vorhandenen Randstruktur und der aktuell ermittelten Ausrichtung der Verteilmaschine bzw. der Verteilvorrichtung oder deren Gestängesegmente jeweils mittels einer Anzeigevorrichtung Hinweise über mögliche Korrekturbewegungen der Lenkung der Verteilmaschine ausgegeben und angezeigt werden. Zudem könnte vorgesehen sein, dass die Verteilmaschine die jeweilige Anpassung der Verteilvorrichtung und/oder der Gestängesegmente sowie der jeweiligen Lenkung und der Fahrbewegungen autonom durchführt, insbesondere ohne jeglichen Eingriff durch eine Bedienperson. Insofern die Verteilmaschine an ein Zugfahrzeug angebaut bzw. mit dieser verbunden ist, könnte auch vorgesehen sein, dass das Zugfahrzeug bzw. deren Steuerungseinheit mit der Regeleinrichtung der Verteilmaschine in Verbindung steht und wiederum das Zugfahrzeug bzw. deren Lenkung und/oder deren Antriebseinheit entsprechend autonom bzw. automatisch auf Basis der vorhandenen Randstruktur und der erfassten aktuellen Relativposition jeweils mittels der Regeleinrichtung der Verteilmaschine angesteuert wird. Somit könnten bspw. auch durch eine Bedienperson durchgeführte Lenk- und Antriebsbefehlt übersteuert werden.

Um die jeweilige Position der Verteilvorrichtung bzw. auch dessen Ausrichtung in Bezug auf die Verteilmaschine bzw. den Rahmen noch exakter zu erfassen, könnte zudem die Ausrichtung der Verteilmaschine miterfasst werden, wobei hierfür bspw. zwischen einem Zugfahrzeug und der Verteilmaschine ein Winkelsensor angebracht sein kann. Auch könnten an den Fahrwerken bzw. an den Rädern oder deren Lagerstellen Lenkwinkelsensoren angebracht sein. Auch könnten an der Verteilmaschine Beschleunigungssensoren oder Drehratensensoren oder Gyroskope angebaut sein. Auch eine Kombination der vorgenannten Sensoren wäre denkbar bzw. vorstellbar.

Um eine exakte Ausrichtung der Gestängesegmente bzw. der Verteilvorrichtung zu erreichen, ist in der Regeleinrichtung ein Steuerungsprogramm hinterlegt, welches unter Berücksichtigung der erfassten Istwerte der Ausrichtung bzw. der Relativposition und der erfassten bzw. vorhandenen Randstruktur, eine Berechnung zur Ansteuerung des oder der Stellglied(er) erstellt, wobei mittels des Steuerungsprogramms hierfür auch entsprechende Verfahrgeschwindigkeiten des oder der Stellglied(er) definiert werden können. Die Verfahrgeschwindigkeiten könnten zudem unter Berücksichtigung und Verarbeitung von verschiedensten Parametern wie bspw. den aktuellen Fahrbewegungen der Verteilmaschine noch weiter präzisiert werden, d.h. je größer die Fahrgeschwindigkeit der Verteilmaschine ist desto schneller könnte die Verfahrgeschwindigkeit des oder der motorischen Stellglied(er) sein.

Die Verfahrgeschwindigkeiten könnten jedoch auch auf Basis von verschiedenen anderen Parametern erfolgen, so dass wiederum durch ein zu schnelles oder zu langsames verschwenken Doppelbehandlungen und/oder Unterbehandlungen vermieden werden können. So kann die Verfahrgeschwindigkeit bspw. auf Basis der Fahrgeschwindigkeit der Verteilmaschine und/oder auf Basis der Ausbringmenge und/oder auf Basis der Wegstrecke und/oder auf Basis der jeweils erfassten Relativpositionen erfolgen. Auch diese Parameter können bspw. wieder mittels verschiedenster Messmittel erfasst und mittels des in der Regeleinrichtung hinterlegten Steuerungsprogramms verarbeitet werden.

Auch wäre es denkbar, dass eine Regelung des zumindest einen motorischen Stellglieds durch eine Vorwärtsfahrt deaktiviert und durch eine Rückwärtsfahrt aktiviert wird. Zudem können dem zumindest einen motorischen Stellglied Dämpfungsmittel zur Unterbindung von sog. Gier- und Nickbewegungen in Fahrtrichtung zugeordnet sein, wobei diese sowohl bei Vorwärtsfahrt als auch bei Rückwärtsfahrt aktiviert bleiben können.

Eine Ansteuerung des oder der Stellglied(er) kann derartig erfolgen, dass die Verteilvorrichtung und/oder deren Gestängesegmente eine zumindest weitgehend parallele Ausrichtung zur vorhandenen Randstruktur aufweisen oder dass sich die projizierten senkrechten Ebenen der Verteilvorrichtung oder deren Gestängesegmente und der Randstruktur schneiden. Auch können sowohl die parallele Ausrichtung als auch die rechtwinkelige Ausrichtung zur Randstruktur in einem definierbaren Offset erfolgen, so dass eine Regelung entsprechend beschleunigt werden kann, jedoch diese dennoch ausreichend genau ist um ein gewünschtes Arbeitsergebnis zu erzielen.

In einer Weiterbildung wäre es zudem denkbar, dass in Abhängigkeit der erfassten Ausrichtung der Verteilvorrichtung bzw. deren Gestängesegmente sowie der vorhandenen Randstruktur eine Ansteuerung der Teilbreiten der Verteilvorrichtung erfolgt, so dass eine Doppelbehandlung des Pflanzenbestandes noch weiter verhindert werden kann. Dies bedeutet, dass durch eine Erfassung und/oder Auswertung der Randstrukturen jeweils einzelne oder mehrere Spritzdüsen abgeschaltet werden können. Auch kann vorgesehen sein, dass in Abhängigkeit der erfassten Ausrichtung der Verteilvorrichtung bzw. deren Gestängesegmente in Bezug auf die erfasste bzw. vorhandene Randstruktur, die Ausbringmengen an den Teilbreiten der Verteilvorrichtung erhöht oder verringert werden bzw. dass auch die Ausbringmengen an einzelnen Spritzdüsen entsprechend erhöht oder verringert werden. So dass wiederum eine Überbehandlung verhindert werden kann. Ebenso wäre es denkbar, dass auf Basis der vorhandenen Randstruktur an der Verteilvorrichtung verschiedene Spritzmuster ausgebracht werden, welche Spritzmuster bspw. durch eine Ansteuerung von verschiedenen Spritzdüsen oder durch verschiedene Ausbringmengen erzeugt werden können. Als Teilbreiten können bspw. auch einzelne Gestängesegmente dienen, so dass bspw. in Abhängigkeit der Randstruktur die Spritzdüsen von einzelnen Gestängesegmenten abgeschaltet werden.

In einer weiteren Ausführungsvariante könnte zudem vorgesehen sein, dass zusätzlich zur Lenkung und/oder der Verschwenkung der Verteilvorrichtung oder von deren Gestängesegmenten um die aufrechten Achsen die Verteilvorrichtung zusätzlich quer zur Fahrrichtung mit verschwenkt werden kann, wobei hierfür die Verteilvorrichtung bspw. mittels eines zusätzlichen Parallelogramms am Rahmen oder an einem dem Rahmen zugeordneten Parallelogramm gelagert sein kann oder bspw. mittels eines quer zur Fahrtrichtung verlaufenden Linearschlitten oder dergl. Zur Verschwenkung quer zur Fahrtrichtung kann der Verteilvorrichtung zumindest ein motorisches Stellglied zugeordnet sein, welches wiederum bspw. auf Basis einer vorhandenen Randstruktur entsprechend angesteuert wird und die Verteilvorrichtung entsprechend quer zur Fahrtrichtung verschwenkt. Auch kann dies ohne ein Verlassen der Fahrspuren erfolgen. Somit können Randstrukturen bzw. Kurven und Ecken noch exakter behandelt werden. Zur Erfassung der jeweiligen Position der Verteilvorrichtung quer zur Fahrtrichtung könnten zudem Sensoren vorhanden sein, um die jeweilige Relativposition zu ermitteln. Die sich durch die Verschwenkung quer zur Fahrtrichtung jeweils ergebenden unbehandelten Flächen könnten somit wiederum als Randstruktur erfasst bzw. definiert werden und bei einer Anschlussfahrt mit der Verteilmaschine an diese die Verteilvorrichtung und/oder deren Gestängesegmente entsprechend auf Basis dieser Randstruktur verschwenkt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1: eine Perspektivansicht einer als selbstfahrende Maschine ausgeführten landwirtschaftlichen Verteilmaschine mit einer sich in Arbeitsposition befindenden Verteilvorrichtung.
- Fig. 2: eine vergrößerte Perspektivansicht der landwirtschaftlichen Verteilmaschine bzw. deren Verteilvorrichtung gemäß der Fig. 1.
- Fig. 3: eine Draufsicht einer als selbstfahrende Maschine ausgeführten landwirtschaftlichen Verteilmaschine mit einer sich in Arbeitsposition befindenden Verteilvorrichtung und mittels Pfeilen angedeuteten Gier- und Nickbewegungen dieser.
- Fig. 4: eine schematische Draufsicht einer als gezogene Maschine ausgeführten landwirtschaftlichen Verteilmaschine mit einer Verteilvorrichtung, welche eine weitgehend parallele Ausrichtung zu einer Randstruktur aufweist.
- Fig. 5: eine schematische Draufsicht einer als gezogene Maschine ausgeführten landwirtschaftlichen Verteilmaschine mit einer Verteilvorrichtung mit zwei Gestängesegmenten, welche jeweils eine weitgehend parallele bzw. rechtwinkelige Ausrichtung zu einer Randstruktur aufweisen.
- Fig. 6: ein Blockschaltbild einer möglichen Wirkkette der Steuerung und/oder Regelung der landwirtschaftlichen Verteilmaschine.

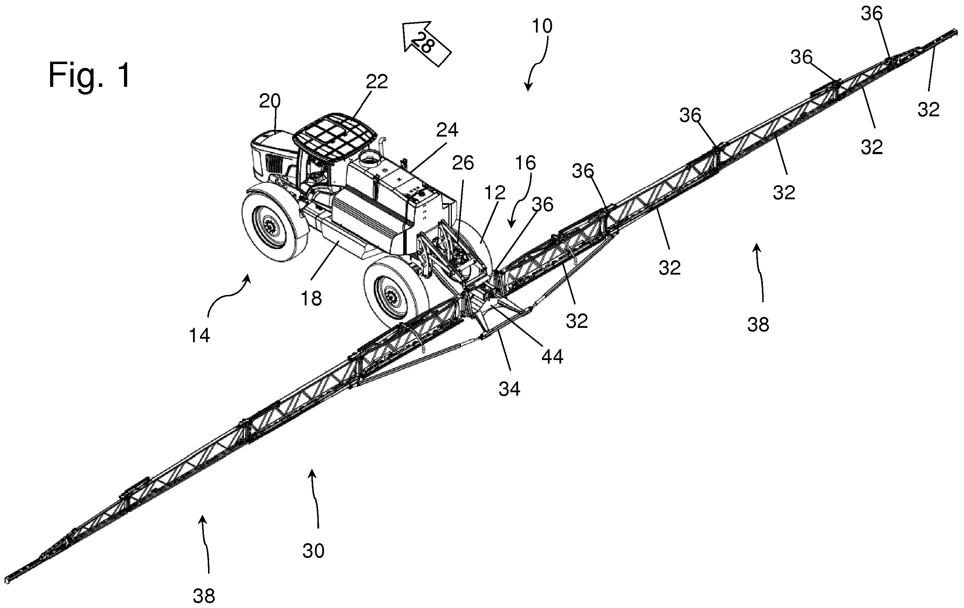

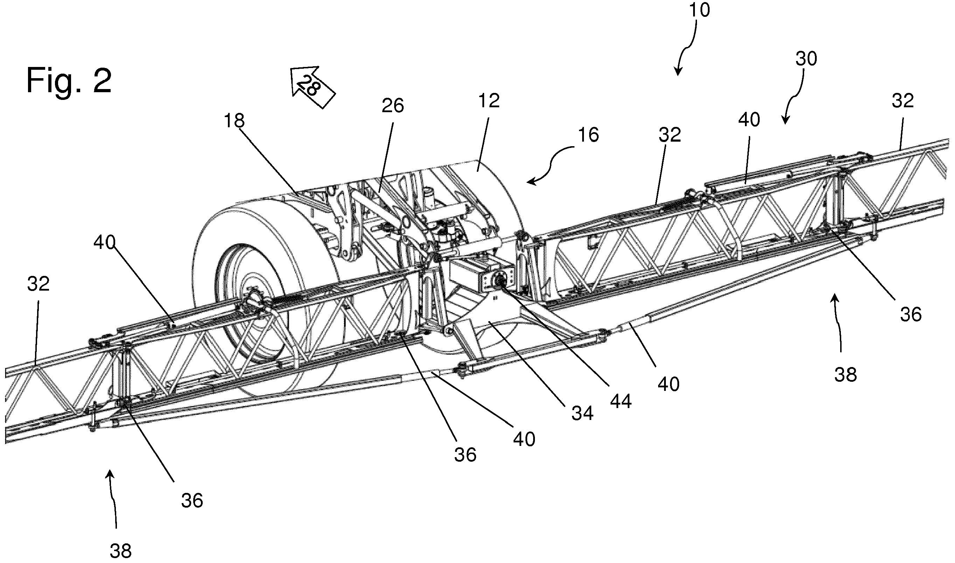

Für gleiche oder gleich wirkende Elemente der Erfindung werden in den Figuren 1 bis 6 jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Verteilmaschine oder das erfindungsgemäße Verfahren ausgestaltet sein können und stellen keine abschließende Begrenzung dar.

Eine Ausführungsvariante einer erfindungsgemäßen landwirtschaftlichen Verteilmaschine 10 geht aus den Figuren 1 bis 3 hervor. Die hierbei gezeigte Verteilmaschine 10 ist als selbstfahrende Maschine ausgeführt, wobei die Erfindung ebenso bei gezogenen oder autonomen Maschinen verwendet bzw. eingesetzt werden kann. Die Verteilmaschine 10 umfasst vier die Verteilmaschine 10 tragende Räder 12, wobei jeweils zwei gegenüberliegende Räder 12 ein Fahrwerk bzw. eine Achse bilden und wobei zumindest die Räder 12 der vorderen Achse 14 oder die Räder 12 der hinteren Achse 16 oder die Räder 12 beider Achsen 14; 16 jeweils bspw. um aufrechte Achsen schwenkbar bzw. lenkbar zum Rahmen 18 angeordnet sind. Die Achsen 14; 16 sind zudem an einem die Komponenten der Verteilmaschine 10 tragenden Rahmen 18 montiert bzw. gelagert. Zudem umfasst die Verteilmaschine 10 einen die Verteilmaschine 10 antreibenden Motor 20 eine Kabine 22 und einen Vorratsbehälter 24 zum Mitführen und Bereitstellen der jeweiligen Flüssigkeit und/oder der körnigen oder granulierten Stoffe oder deren Gemische.

Am hinteren Ende ist dem Rahmen 18 ein mittels Aktoren in dessen Höhe in Bezug auf den Rahmen 18 verstellbares Parallelogramm 26 zugeordnet. An welches eine sich quer zur Fahrtrichtung 28 erstreckende Verteilvorrichtung 30 anschließt. Es sei hierbei nochmals darauf hingewiesen, dass die Ausführungsform mittels Parallelogramm 26 nur eine Anbaumöglichkeit der Verteilvorrichtung 30 darstellt. Ebenso wäre es auch denkbar, diese direkt am Rahmen 18 anzubringen. Der Einfachheit halber wird nachfolgend jedoch die Anbringung der Verteilvorrichtung 30 jeweils auf den Rahmen bezogen, wobei dadurch jedoch eine Verbindung mittels eines Parallellogramm 26 oder einem anderen Zwischensegment oder Zwischenrahmen nicht ausgeschlossen ist, sondern sich die Bezeichnung Rahmen in Verbindung mit der Anbringung der Verteilvorrichtung 30 gleichermaßen auch auf derartige Ausführungsformen bezieht.

Die Verteilvorrichtung ist in mehrere Gestängesegmente 32 unterteilt und besteht aus einem Mittelteil 34 und jeweils links und rechts an diesem über aufrechte Achsen 36 schwenkbar angebauten Seitenteilen 38. Wobei ebenso die Seitenteile 38 wiederum aus mehreren ebenfalls mittels aufrechter Achsen 36 schwenkbar zueinander angeordneter Gestängesegmente 32 zusammengesetzt sind. Die gezeigte Verteilmaschine 10 setzt sich bspw. aus insgesamt elf Gestängesegmenten 32 zusammen, welche jeweils um aufrechte Achsen 36 zueinander verschwenkbar sind.

Zudem könnte ebenso die Verteilvorrichtung 30 bzw. dessen Mittelteil 34 um eine aufrechte Achse schwenkbar am Rahmen 18 bzw. am Parallellogramm 26 angebracht sein, wodurch auch die gesamte Verteilvorrichtung 30 entsprechend verschwenkt werden könnte.

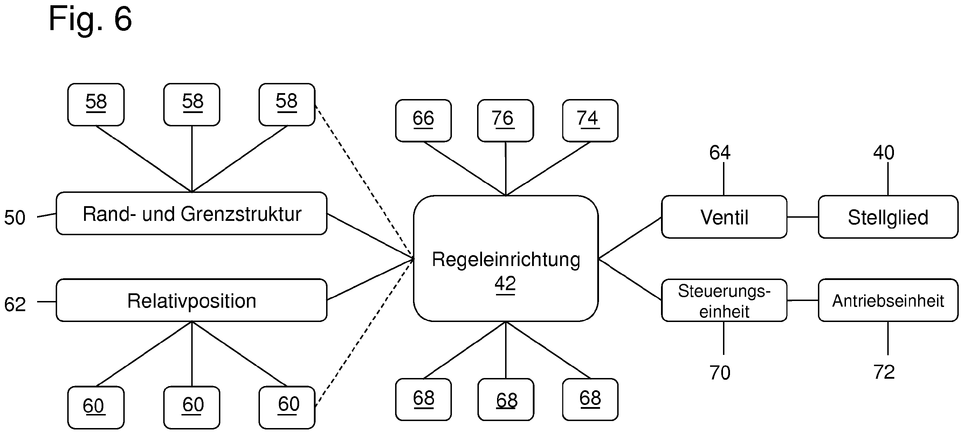

Zum Verschwenken der jeweiligen Gestängesegmente 32 zueinander bzw. der Verteilvorrichtung 30 um die jeweiligen aufrechten Achsen 36 sind an diesen motorische Stellglieder 40 vorgesehen, welche insbesondere von einer elektronischen Regeleinrichtung 42 angesteuert bzw. betätigt werden (vergl. Fig. 6). Bei den Stellgliedern 40 gemäß den Figuren 1 bis 3 handelt es sich jeweils um hydraulisch betriebene Zylinder bzw. Linearantriebe, welche von einem elektrisch betätigten Ventil angesteuert werden. Es wären jedoch auch pneumatische und/oder elektrisch betriebene Stellglieder 40 verwendbar.

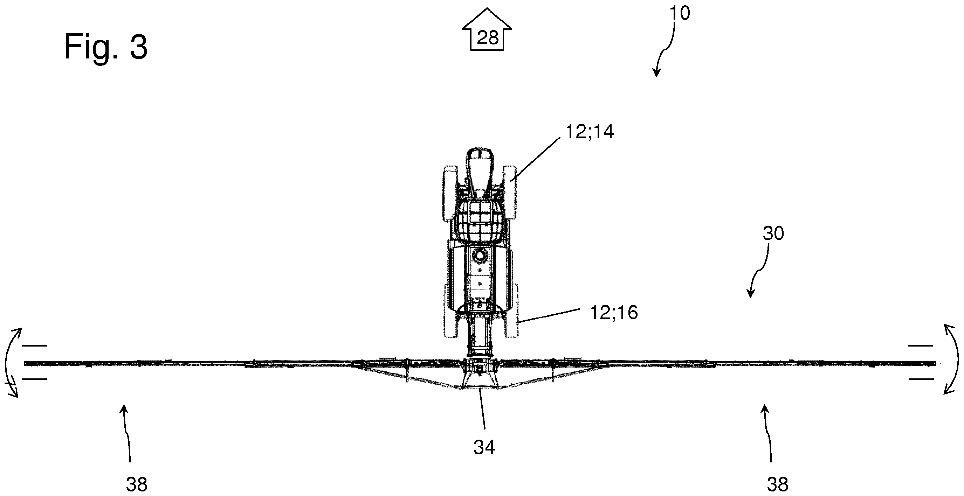

Mittels der vorhandenen motorischen Stellglieder 40 kann somit auch den auf die Verteilvorrichtung 30 wirkenden Gier- und Nickbewegungen (vergl. Fig. 3 Pfeile), welche bspw. sensorisch erfasst werden können, durch eine entsprechende Ansteuerung der Stellglieder 40 entgegen gewirkt werden. Auch können die motorischen Stellglieder 40 mit Dämpfungsmittel oder dergl. versehen sein, um somit entsprechenden Gier- und Nickbewegungen entgegenzuwirken.

Des Weiteren kann die Verteilvorrichtung 30 um eine in Fahrtrichtung 28 verlaufende Drehachse 44 mittels zumindest eines Antriebselements 46 entsprechend einer Bodenkontur wiederum verschwenkt werden, um somit eine möglichst exakte Anpassung an die jeweilige Bodenkontur bzw. den jeweiligen Horizont zu erreichen bzw. um möglichst gleiche Abstände zwischen der Verteilvorrichtung 30 und der Bodenkontur bzw. zu einem Pflanzenbestand zu erreichen.

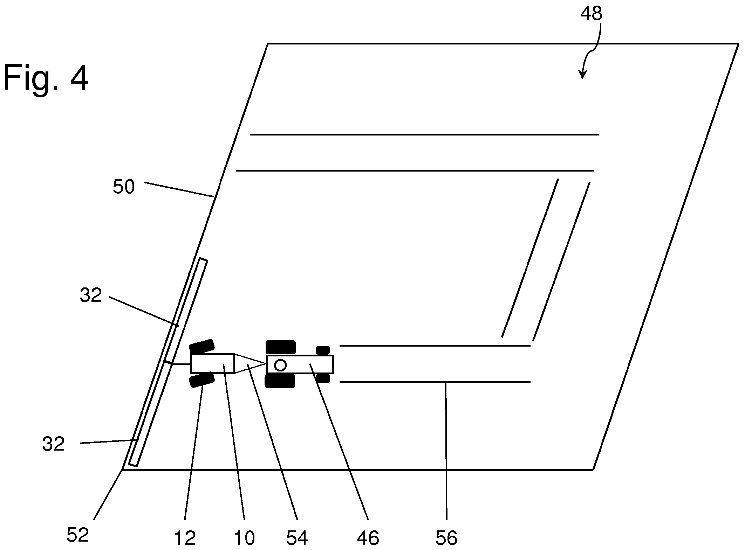

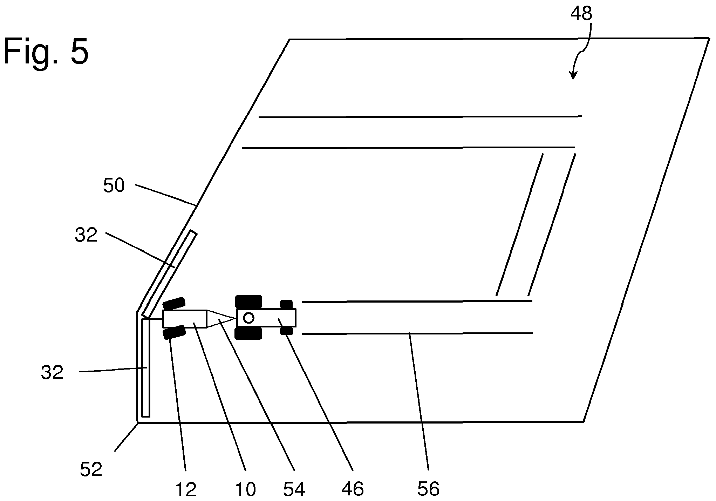

Weitere Details der Erfindung gehen aus den schematischen Draufsichten der Figuren 4 und 5 hervor. Die hierbei gezeigte landwirtschaftliche Verteilmaschine 10 ist als mittels eines Zugfahrzeugs 46 gezogene landwirtschaftliche Verteilmaschine 10 ausgeführt, wobei auch hierbei wiederum angemerkt sei, dass die Erfindung ebenso bei selbstfahrenden oder autonomen Verteilmaschinen bzw. landwirtschaftlichen Maschinen verwendet bzw. eingesetzt werden kann. Die Verteilmaschine 10 wird mittels eines Zugfahrzeuges 46 über eine Ackerfläche 48 bewegt, wobei die Ackerfläche 48 eine sich aus mehreren Seiten zusammengesetzte Randstruktur 50 aufweist, welche Randstruktur 50 zudem mehre Ecken 52 mit verschiedenen Winkel zueinander beinhaltet. Die Verbindung zwischen der Verteilmaschine 10 und dem Zugfahrzeug erfolgt mittels einer Zugvorrichtung bzw. einer Zugdeichsel 54. Neben den in den Figuren 4 und 5 gerade verlaufenden Randstrukturen 50 wären ebenso Randstrukturen 50 denkbar, welche Kurven aufweisen, bzw. Randstrukturen 50, welche Ecken 52 und Kurven aufweisen.

Die Verteilmaschine 10 weist zudem wiederum eine Achse bzw. ein Fahrwerk mit zwei jeweils lenkbaren Rädern 12 auf, welche Räder 12 mittels zumindest eines motorischen Stellgliedes 40 verschwenkt bzw. gelenkt werden können. Es sei hierzu angemerkt, dass neben einer Lenkung der Räder 12 es ebenso denkbar wäre, die Verteilmaschine 10 mittels einer verschwenkbaren Zugvorrichtung 54 zu lenken oder auch die Verteilmaschine 10 sowohl mittels der Räder 12 als auch mittels der Zugvorrichtung 54 zu lenken. Die landwirtschaftliche Verteilmaschine 10 wird mittels des Zugfahrzeuges 46 entlang von Fahrspuren 56 geführt. Bei den Fahrspuren 56 kann es sich bspw. um sog. Fahrgassen handeln. Es wären jedoch auch andere Fahrspuren 56 denkbar, insbesondere können die jeweiligen Fahrspuren 56 mittels Spurermittlungseinrichtungen 74 erfasst und/oder ausgewertet werden, bspw. könnten diese auch in der Regeleinrichtung 42 hinterlegt sein oder es könnten entsprechende Daten mittels der Regeleinrichtung 42 von einer Datenbank abgerufen werden.

Um in Abhängigkeit der jeweiligen Fahrspuren 56 und der jeweils vorhandenen Randstrukturen 50 eine möglichst ganzflächige Behandlung der Ackerfläche 48 zu erreichen, ist vorgesehen, dass die jeweilige Randstruktur 50 mittels verschiedenster Konturermittlungseinrichtungen 58 wie bspw. einem Laserscanner und/oder einer Kamera und/oder einem Kamerasystem und/oder mittels eines GPS-System und/oder mittels Radarsensoren oder dergl. erfasst wird und an die Regeleinrichtung 42 entsprechend übermittelt wird, bzw. an der Verteilmaschine 10 angebaut sind, oder mit der Regeleinrichtung 42 in Verbindung stehen. Auch können die jeweiligen Randstrukturen 50 aus einer Datenbank mittels der Regeleinrichtung 42 entsprechend abgerufen oder ausgelesen werden.

Zudem sind an der Verteilvorrichtung 30 und/oder an den jeweiligen Gestängesegmenten 32 und/oder an den jeweils lenkbaren Räder 12 und/oder der lenkbaren Zugvorrichtung 54 und/oder den Stellglieder 40 bzw. an den aufrechten Achsen 36 Sensoren 60 derartig angebracht, dass mittels dieser die aktuelle Ausrichtung bzw. Relativposition 62 ermittelt wird. Mittels der Regeleinrichtung 42 kann somit durch ein entsprechendes Steuerungsprogramm jeweils eine Ausrichtung der Verteilvorrichtung 30 oder eine Ausrichtung von deren Gestängesegmenten 32 in Bezug auf die Randstruktur 50 berechnet werden und anschließend das jeweilige motorische Stellglied 40 bzw. ein diesem zugeordnetes Ventil 64 entsprechend angesteuert werden und somit die Verteilmaschine 10 bzw. dessen Verteilvorrichtung 30 oder dessen Gestängesegmente 32 in eine gewünschte Position bewegt werden.

Um eine zumindest weitgehend parallele und/oder rechtwinkelige Ausrichtung der Verteilvorrichtung 30 bzw. der jeweiligen Gestängesegmente 32 zu erreichen, werden bzw. wird auf Basis des Steuerungsprogramms das jeweilige motorische Stellglied 40 entsprechend angesteuert und die Verteilvorrichtung 30 und/oder die Gestängesegmente 32 entsprechend verschwenkt. Auch kann die Verteilmaschine 10 mittels der Zugdeichsel 54 bzw. mittels der Räder 12 entsprechend gelenkt werden, um mittels der Verteilvorrichtung 30 bzw. mittels der Gestängesegmente 32 eine zumindest weitgehend parallele und/oder rechtwinkelige Ausrichtung zur vorhandenen Randstruktur 50 zu erreichen. Auch könnten sowohl die Verteilmaschine 10 entsprechend gelenkt als auch die Verteilvorrichtung 30 und/oder die Gestängesegmente 32 entsprechend verschwenkt werden.

So wurde gemäß der Fig. 4 die gesamte Verteilvorrichtung 30 derartig verschwenkt, dass diese eine zumindest weitgehend parallele Ausrichtung zur Randstruktur 50 aufweist, wohingegen gemäß der Fig. 5 die Verteilvorrichtung 30 bzw. deren Gestängesegmente 32 derartig verschwenkt wurden, dass ein Gestängesegment 32 eine weitgehend parallele Ausrichtung zu einer Randstruktur 50 aufweist, sowie dass ein Gestängesegment 32 eine weitegehend parallele und rechtwinkelige Ausrichtung zu einer Randstruktur 50 aufweist.

Die Verteilmaschine 10 kann jeweils entlang einer definierbaren bzw. einer definierten Fahrspur 56 geführt werden, was bedeutet, dass deren Räder 12 und/oder deren Zugvorrichtung 54 derartig gelenkt werden, dass diese der Fahrspur 56 folgen. So können zur Erfassung und/oder Auswertung dieser Fahrspur 56 der Verteilmaschine 10 zugeordnet und/oder mit einer Regeleinrichtung 42 der Verteilmaschine 10 in Verbindung stehend Spurermittlungseinrichtungen 74 vorgesehen sein. Eine Ansteuerung der Stellglieder 40 könnte auch derartig erfolgen, dass die Verteilmaschine 10 jeweils den Fahrspuren 56 folgt, die Verteilvorrichtung 30 oder deren Gestängesegmente 32 hingegen jeweils auf Basis der vorhandenen Randstruktur 10 entsprechend verschwenkt werden, so dass die Verteilvorrichtung 30 oder deren Gestängesegmente 32 der Randstruktur 50 parallel und/oder rechtwinkelig folgen. Dies ist insbesondere bei einer Rückwärtsfahrt von Vorteil, da somit die Ecken und Kurven oder dergl. jeweils ganzflächig behandelt werden durch die fest definierten bzw. definierbare Fahrspuren 56 jedoch wenig bis keine Pflanzen überfahren werden.

Weitere Details der Ansteuerung des oder der motorischen Stellglieder 40 gehen aus dem Blockschaltbild der Fig. 6 hervor. Zur Erfassung einer Randstruktur 50 bzw. einer Grenzstruktur sind an der Verteilmaschine 10 bzw. mit der Regeleinrichtung 42 in Verbindung stehenden Konturermittlungseinrichtungen 58 vorgesehen. Die Konturermittlungseinrichtungen 58 können die jeweilige Randstruktur 50 entsprechend erfassen und/oder auswerten und an die Regeleinrichtung 42 übermitteln, die Konturermittlungseinrichtungen 58 könnten jedoch auch nur Signale an die Regeleinrichtung 42 übermitteln, anschließend könnte mittels eines in der Regeleinrichtung 42 hinterlegten Steuerungsprogramm eine Randstruktur 50 entsprechend generiert bzw. ausgewertet werden. Auch könnte die Konturermittlungseinrichtung 58 eine Datenbank sein bzw. könnten diese mit einer Datenbank in Verbindung stehen.

Zudem sind zur Erfassung einer Relativposition 62 der Verteilvorrichtung 30 und/oder der Gestängesegmente 32 bzw. der Ausrichtung der Räder 12 und/oder der Zugvorrichtung 54 Sensoren 60 vorgesehen bspw. an der Verteilmaschine 10 und/oder an den aufrechten Achsen 36 und/oder den Stellgliedern 40. Bei den Sensoren 60 kann es sich insbesondere um jegliche Art von Positionssensoren handeln, bspw. um Winkelpotentiometer oder Winkelsensoren oder dergl. Die Sensoren 60 können die jeweilige Relativposition 62 entsprechend erfassen und an die Regeleinrichtung 42 übermitteln. Die Sensoren 60 könnten jedoch auch nur Signale an die Regeleinrichtung 42 übermitteln. Die entsprechenden Signale können anschließend mittels eines in der Regeleinrichtung 42 hinterlegten Steuerungsprogramms in entsprechende Werte der Relativpositionen 62 umgewandelt werden.

Neben der Randstruktur 50 und der Relativposition 62 können in die Regeleinrichtung 42 noch weitere Angaben eingegeben, bzw. von dieser verarbeitet werden. So wäre es denkbar, dass mittels zusätzlicher Messmittel 66 verschiedenste Parameter 76 wie bspw. die aktuellen Fahrbewegungen 68 erfasst werden. Bei den Fahrbewegungen 68 kann bspw. erfasst werden ob die Verteilmaschine 10 oder dessen Zugfahrzeug 46 sich vorwärts- oder rückwärts bewegt oder mit welcher Geschwindigkeit die Verteilmaschine 10 oder dessen Zugfahrzeug 46 bewegt wird. Auch könnte erfasst werden, ob die Verteilmaschine 10 oder dessen Zugfahrzeug 46 beschleunigt oder verzögert wird.

Auch könnten bspw. die Fahrspuren 56 mittels zusätzlicher Messmittel 66 bzw. mittels Spurermittlungseinrichtungen 74 erfasst und/oder ausgewertet werden, die Fahrspuren 56 könnten jedoch auch mittels eines GPS-Systems an die Regeleinrichtung 42 übermittelt werden. Ebenso könnten die Fahrspuren 56 in einer mit der Regeleinrichtung 42 in Verbindung stehenden Datenbank hinterlegt sein.

Des Weiteren könnten weitere Messmittel 66 zur Ermittlung der Ausrichtung der Verteilmaschine 10 vorgesehen sein, bspw. Beschleunigungssensoren oder Drehratensensoren oder Gyroskope oder Positionssensoren oder dergl.

Auf Basis der jeweiligen Randstruktur 50 und der Relativposition 62 wird anschließend mittels der Regeleinrichtung 42 ein zum jeweiligen motorischen Stellglied 40 zugehöriges Ventil 64 angesteuert, welches anschließend das Stellglied 40 derartig ansteuert bzw. betätigt, dass die Verteilvorrichtung 30 bzw. die Gestängesegmente 32 bzw. die Verteilmaschine 10 eine jeweils gewünschte Position einnehmen.

Zudem könnte vorgesehen sein, dass darüber hinaus bspw. eine weitere Steuerungseinheit 70 und eine Antriebseinheit 72 der Verteilmaschine 10 angesteuert werden und somit auch die Fahrbewegungen der Verteilmaschine 10 wiederum in Abhängigkeit der Relativposition 62 und der Randstruktur 50 sowie bspw. auch der Fahrspuren 56 entsprechend gesteuert bzw. geregelt werden. Somit kann insbesondere erreicht werden, dass bei einer Verteilmaschine 10 sowohl deren Verteilvorrichtung 10 als auch deren Fahrbewegungen weitgehend autonom und ohne Einwirkung einer Bedienperson durchgeführt werden.

Um eine jeweils möglichst exakte Ausrichtung der Gestängesegmente 32 bzw. der Verteilvorrichtung 30 zu erreichen, ist in der Regeleinrichtung 42 ein Steuerungsprogramm hinterlegt, welches unter Berücksichtigung der erfassten Istwerte der Ausrichtung bzw. der Relativposition und der erfassten bzw. vorhandenen Randstruktur 50 , eine Berechnung zur Ansteuerung des motorischen Stellglied 40 erstellt, wobei mittels des Steuerungsprogramms hierfür auch entsprechende Verfahrgeschwindigkeiten des Stellgliedes 40 definiert werden können. Die Verfahrgeschwindigkeiten könnten zudem unter Berücksichtigung und Verarbeitung verschiedenster Parameter 76 wie bspw. von aktuellen Fahrbewegungen 68 der Verteilmaschine 10 noch weiter präzisiert werden, d.h. je größer die Fahrgeschwindigkeit der Verteilmaschine 10 ist, desto schneller könnte die Verfahrgeschwindigkeit des oder der motorischen Stellglied(er) 40 sein.

Die Verfahrgeschwindigkeiten könnten jedoch auch auf Basis von verschiedenen anderen Parametern 76 erfolgen, so dass wiederum durch ein zu schnelles oder zu langsames verschwenken Doppelbehandlungen und/oder Unterbehandlungen vermieden werden können. So kann die Verfahrgeschwindigkeit bspw. auf Basis der Fahrgeschwindigkeit der Verteilmaschine 10 und/oder auf Basis der Ausbringmenge und/oder auf Basis der Wegstrecke und/oder auf Basis der jeweils erfassten Relativpositionen erfolgen. Auch diese Parameter 76 können bspw. wieder mittels verschiedenster Messmittel 66 erfasst und mittels des in der Regeleinrichtung 42 hinterlegten Steuerungsprogramms verarbeitet werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Landwirtschaftliche Verteilmaschine
- 12: Räder
- 14: vordere Achse
- 16: hinter Achse
- 18: Rahmen
- 20: Motor
- 22: Kabine
- 24: Vorratsbehälter
- 26: Parallellogrammführung
- 28: Fahrtrichtung
- 30: Verteilvorrichtung
- 32: Gestängesegment
- 34: Mittelteil
- 36: aufrechte Achse
- 38: Seitenteil
- 40: Stellglied
- 42: Regeleinrichtung
- 44: Drehachse
- 46: Zugfahrzeug
- 48: Ackerfläche
- 50: Randstruktur
- 52: Ecke
- 54: Zugdeichsel; Zugvorrichtung
- 56: Fahrspur
- 58: Konturermittlungseinrichtung
- 60: Sensoren
- 62: Relativposition
- 64: Ventil
- 66: Messmittel
- 68: Fahrbewegungen
- 70: Steuerungseinheit
- 72: Antriebseinheit
- 74: Spurermittlungseinrichtung
- 76: Parameter

## Patentansprüche

1. Landwirtschaftliche Verteilmaschine (10) mit zumindest einem Rahmen (18), einem
Vorratsbehälter (24) oder mehreren Vorratsbehältern (24) und einer Verteilvorrichtung (30) zum Ausbringen von Flüssigkeiten und/oder körnigen oder granulierten Stoffen, wobei die Verteilvorrichtung (30) beweglich am Rahmen (18) angeordnet und in mehrere Gestängesegmente (32) unterteilt ist, welche über aufrechte Achsen (36) verschwenkbar zueinander und/oder zum Rahmen (18) angeordnet sind,
wobei die Verteilmaschine (10) zudem zumindest ein wenigstens zwei Räder (12) aufweisendes Fahrwerk und/oder eine Zugvorrichtung (54) umfasst, wobei die Räder (12) und/oder die Zugvorrichtung (54) über aufrechte Achsen schwenkbar bzw. lenkbar zum Rahmen (18) angeordnet sind, wobei zum Verschwenken bzw. zum Lenken jeweils zumindest ein von einer elektronischen Regeleinrichtung (42) ansteuerbares motorisches Stellglied (40) vorgesehen ist,
wobei der Verteilvorrichtung (30) und/oder den Gestängesegmenten (32) und/oder den aufrechten Achsen (36) und/oder dem Fahrwerk und/oder der Zugvorrichtung (54) und/oder den Stellgliedern (40) Sensoren (60) zur Erfassung und Weiterleitung eines Istwertes bzgl. der Ausrichtung der Verteilvorrichtung (30) und/oder der Gestängesegmente (32) und/oder der aufrechten Achsen und/oder des Fahrwerk und/oder der Zugvorrichtung (54) und/oder der Stellglieder (40) zugeordnet ist, wobei der Verteilmaschine (10) zugeordnet und/oder mit der Regeleinrichtung (42) in Verbindung stehend Konturermittlungseinrichtungen (58) zur Erfassung und/oder Auswertung einer Randstruktur (50) einer von der landwirtschaftlichen Verteilmaschine (10) zu bearbeitenden und/oder zu überfahrenden Fläche zugeordnet sind, wobei als Konturermittlungseinrichtung (58) ein Laserscanner und/oder eine Kamera und/oder ein Kamerasystem und/oder ein Radarsensor verwendet werden
und/oder wobei eine Randstruktur (50) anhand eines ermittelten Kurvenradius mittels eines in der Regeleinrichtung (42) hinterlegten Steuerungsprogramms berechnet wird,
und wobei der Verteilmaschine (10) zugeordnet und/oder mit der Regeleinrichtung (42) in Verbindung stehende Spurermittlungseinrichtungen (74) zur Erfassung und/oder Auswertung einer Fahrspur (56) zugeordnet sind,
**dadurch gekennzeichnet, dass** eine Ansteuerung der motorischen Stellglieder (40) in Abhängigkeit von einer vorhandenen Randstruktur (50) und von einer vorhandenen Fahrspur (56) derartig erfolgt, dass die Gestängesegmente (32) und/oder die Verteilvorrichtung (30) eine zumindest weitgehend parallele und/oder rechtwinklige Ausrichtung zur Randstruktur (50) aufweisen.

2. Landwirtschaftliche Verteilmaschine nach Anspruch 1, **dadurch gekennzeichnet, dass** das zumindest eine motorische Stellglied (40) des Fahrwerks und/oder der Zugvorrichtung (54) derartig angesteuert wird, dass die Räder (12) einer Fahrspur (56) folgen.

3. Landwirtschaftliche Verteilmaschine nach Anspruch 1 oder 2, **dadurch gekennzeichnet, dass** zur Erfassung der Ausrichtung der Verteilmaschine (10) ein Winkelsensor zwischen einem Zugfahrzeug (46) und der Verteilmaschine (10) angeordnet ist, und/oder dass die Verteilmaschine (10) Lenkwinkelsensoren (60) aufweist, und/oder dass der Verteilmaschine (10) zumindest ein Gyroskop zugeordnet ist, und/oder dass der Verteilmaschine (10) zumindest ein Beschleunigungssensor zugeordnet ist.

4. Landwirtschaftliche Verteilmaschine nach einem der vorhergehenden Ansprüche, **dadurch gekennzeichnet, dass** mittels eines in der Regeleinrichtung (42) hinterlegten Steuerungsprogramms unter Berücksichtigung der Istwerte der Ausrichtung und der vorhandenen Randstruktur (50) sowie der gewünschten und/oder vorhandenen Fahrspur (56) eine Berechnung zur Ansteuerung der zumindest zwei motorischen Stellglieder (40) erfolgt.

5. Landwirtschaftliche Verteilmaschine nach Anspruch 4, **dadurch gekennzeichnet, dass** mittels eines in der Regeleinrichtung (42) hinterlegten Steuerungsprogramms unter Berücksichtigung der Fahrbewegung und der Fahrgeschwindigkeit der Verteilmaschine (10) eine Berechnung zur Ansteuerung des zumindest einen motorischen Stellglieds (40) des Fahrwerks oder des zumindest einen motorischen Stellglieds (40) der Verteilvorrichtung (30) und/oder deren Gestängesegmente (32) erfolgt.

6. Landwirtschaftliche Verteilmaschine nach einem der vorhergehenden Ansprüche, **dadurch gekennzeichnet, dass** diese als selbstfahrende Verteilmaschine (10) oder als mittels eines Zugfahrzeug (46) gezogene Verteilmaschine (10) oder als autonome Verteilmaschine (10) ausgeführt ist.

7. Landwirtschaftliche Verteilmaschine nach Anspruch 6, **dadurch gekennzeichnet, dass** anhand der vorhandenen Randstruktur (50) und/oder der gewünschten Fahrspur (56) eine automatisierte Ansteuerung der Lenkung eines Zugfahrzeuges (46) und/oder einer selbstfahrenden Verteilmaschine (10) und/oder einer autonomen Verteilmaschine (10) erfolgt.

8. Landwirtschaftliche Verteilmaschine nach Anspruch 6, **dadurch gekennzeichnet, dass** anhand der vorhandenen Randstruktur (50) und/oder der gewünschten Fahrspur (56) eine Anzeige über erforderliche Lenkbewegungen eines Zugfahrzeuges (46) oder einer selbstfahrenden Verteilmaschine (10) erfolgen.

9. Landwirtschaftliche Verteilmaschine nach einem der vorhergehenden Ansprüche, **dadurch gekennzeichnet, dass** eine parallele und/oder rechtwinkelige Ausrichtung einen definierbaren Offset aufweisen.

10. Landwirtschaftliche Verteilmaschine nach einem der vorhergehenden Ansprüche, **dadurch gekennzeichnet, dass** als Konturermittlungseinrichtung (58) ein GPS-System verwendbar ist und/oder dass in der Regeleinrichtung (42) Karten der jeweiligen Ackerfläche hinterlegt sind und/oder dass die Regeleinrichtung (42) die jeweiligen Randstrukturen (50) aus einer Datenbank ausliest.

11. Landwirtschaftliche Verteilmaschine nach einem der vorhergehenden Ansprüche, **dadurch gekennzeichnet, dass** die Spurermittlungseinrichtung (74) als Laserscanner und/oder als Kamera und/oder als Kamerasystem und/oder als Radarsensor ausgeführt ist und/oder dass die Spurermittlungseinrichtung (74) als GPS-System ausgeführt ist und/oder dass die Regeleinrichtung (42) die jeweilige Fahrspur (56) aus einer Datenbank ausliest und/oder dass eine Fahrspur (56) anhand eines ermittelten Kurvenradius mittels eines in der Regeleinrichtung (42) hinterlegten Steuerungsprogramms berechnet wird.

12. Landwirtschaftliche Verteilmaschine nach einem der vorhergehenden Ansprüche, **dadurch gekennzeichnet, dass** in Abhängigkeit einer erfassten Ausrichtung der Gestängesegmente (32) und/oder der Verteilvorrichtung (30) und einer vorhandenen Randstruktur (50) eine Ansteuerung der Teilbreiten der Verteilvorrichtung (30) erfolgt, und/oder dass in Abhängigkeit der erfassten Ausrichtung und der vorhandenen Randstruktur (50) die Ausbringmengen der Teilbreiten der Verteilvorrichtung (30) geregelt werden und/oder dass in Abhängigkeit der erfassten Ausrichtung und der vorhandenen Randstruktur (50) verschiedene Spritzmuster erzeugt werden.

13. Landwirtschaftliche Verteilmaschine nach einem der vorhergehenden Ansprüche, **dadurch gekennzeichnet, dass** die Verfahrgeschwindigkeit des zumindest einen Stellglieds (40) in Abhängigkeit der Fahrgeschwindigkeit und/oder der Ausbringmenge und/oder der aktuellen Ausrichtung vergrößert oder verringert wird.

14. Landwirtschaftliche Verteilmaschine nach einem der vorhergehenden Ansprüche, **dadurch gekennzeichnet, dass** die Verteilvorrichtung (30) quer zur Fahrrichtung (28) verschwenkbar ist, wobei ein Verschwenken auf Basis einer vorhandenen Randstruktur (50) erfolgt.

15. Verfahren zur Steuerung und/oder Regelung einer Verteilmaschine (10) mit zumindest einem Rahmen (18), einem Vorratsbehälter (24) oder mehreren Vorratsbehältern (24) und einer Verteilvorrichtung (30) zum Ausbringen von Flüssigkeiten und/oder körnigen oder granulierten Stoffen, wobei die Verteilvorrichtung (30) beweglich am Rahmen (18) angeordnet und in mehrere Gestängesegmente (32) unterteilt ist, welche über aufrechte Achsen verschwenkbar zueinander und/oder zum Rahmen (18) angeordnet sind, umfassend zudem zumindest ein, wenigstens zwei Räder (12) aufweisendes Fahrwerk und/oder eine Zugvorrichtung (54), wobei die Räder (12) und/oder die Zugvorrichtung (54) über aufrechte Achsen schwenkbar bzw. lenkbar zum Rahmen (18) angeordnet sind, wobei zum Verschwenken bzw. zum Lenken jeweils zumindest ein von einer elektronischen Regeleinrichtung (42) ansteuerbares motorisches Stellglied (40) vorgesehen ist,
**gekennzeichnet durch** die Verfahrensschritte:
- Erfassung eines Istwertes bzgl. der Ausrichtung der Gestängesegmente (32) und/oder der Verteilvorrichtung (30) und/oder der Räder (12) und/oder der Zugvorrichtung (54) mittels diesen und/oder den aufrechten Achsen (36) und/oder den Stellglieder (40) zugeordneter Sensoren (60),
- Erfassung und Auswertung einer Randstruktur (50) einer von der landwirtschaftlichen Verteilmaschine (10) zu bearbeitenden und/oder zu überfahrenden Fläche mittels der Verteilmaschine (10) zugeordneter und/oder mit der Regeleinrichtung (42) in Verbindung stehender Konturermittlungseinrichtungen (58), wobei als Konturermittlungseinrichtung (58) ein Laserscanner und/oder eine Kamera und/oder ein Kamerasystem und/oder ein Radarsensor verwendet werden und/oder wobei eine Randstruktur (50) anhand eines ermittelten Kurvenradius mittels eines in der Regeleinrichtung (42) hinterlegten Steuerungsprogramms berechnet wird,
- Erfassung und/oder Auswertung einer Fahrspur (56) mittels der Verteilmaschine (10) zugeordneter und/oder mit der Regeleinrichtung (42) in Verbindung stehender Spurermittlungseinrichtungen (74),
- Ansteuerung der motorischen Stellglieder (40) in Abhängigkeit von einer vorhandenen Randstruktur (50) und von einer vorhandenen Fahrspur (56) derartig, dass die Gestängesegmente (32) und/oder die Verteilvorrichtung (30) eine zumindest weitgehend parallele und/oder rechtwinklige Ausrichtung zur Randstruktur (50) aufweisen.

16. Verfahren nach Anspruch 15, **dadurch gekennzeichnet, dass** das zumindest eine motorische Stellglied (40) des Fahrwerks und/oder der Zugvorrichtung (54) derartig angesteuert wird, dass die Räder (12) einer Fahrspur (56) folgen.

17. Verfahren nach Anspruch 15 oder 16, **dadurch gekennzeichnet, dass** zur Erfassung der Ausrichtung der Verteilmaschine (10) ein Winkelsensor zwischen einem Zugfahrzeug (46) und der Verteilmaschine (10) angeordnet ist und/oder die Verteilmaschine (10) Lenkwinkelsensoren (60) aufweist und/oder dass der Verteilmaschine (10) zumindest ein Gyroskop zugeordnet ist und/oder dass der Verteilmaschine (10) zumindest ein Beschleunigungssensor zugeordnet ist.

18. Verfahren nach einem der Ansprüche 15 bis 17, **dadurch gekennzeichnet, dass** mittels eines in der Regeleinrichtung (42) hinterlegten Steuerungsprogramms unter Berücksichtigung der Istwerte der Ausrichtung und der vorhandenen Randstruktur (50) sowie der gewünschten Fahrspur (56), eine Berechnung zur Ansteuerung der zumindest zwei motorischen Stellglieder (40) erfolgt.

19. Verfahren nach einem der Ansprüche 15 bis 18, **dadurch gekennzeichnet, dass** mittels eines in der Regeleinrichtung (42) hinterlegten Steuerungsprogramms unter Berücksichtigung der Fahrbewegung und der Fahrgeschwindigkeit der Verteilmaschine (10) eine Berechnung zur Ansteuerung des zumindest einen motorischen Stellglied (40) des Fahrwerks oder des zumindest einen motorischen Stellglied (40) der Verteilvorrichtung (30) und/oder deren Gestängesegmente (32) erfolgt.

20. Verfahren nach einem der Ansprüche 15 bis 19, **dadurch gekennzeichnet, dass** anhand der vorhandenen Randstruktur (50) und/oder der gewünschten Fahrspur (56) eine automatisierte Ansteuerung der Lenkung eines Zugfahrzeuges (46) und/oder einer selbstfahrenden Verteilmaschine (10) und/oder einer autonomen Verteilmaschine (10) erfolgt.

21. Verfahren nach einem der Ansprüche 15 bis 20, **dadurch gekennzeichnet, dass** anhand der vorhandenen Randstruktur (50) und/oder der gewünschten Fahrspur (56) eine Anzeige über erforderliche Lenkbewegungen eines Zugfahrzeuges (46) oder einer selbstfahrenden Verteilmaschine (10) erfolgen.

22. Verfahren nach einem der Ansprüche 15 bis 21, **dadurch gekennzeichnet, dass** in Abhängigkeit einer erfassten Ausrichtung der Gestängesegmente (32) und/oder der Verteilvorrichtung (30) und einer vorhandenen Randstruktur (50) eine Ansteuerung der Teilbreiten der Verteilvorrichtung (30) erfolgt, und/oder dass in Abhängigkeit der erfassten Ausrichtung und der vorhandenen Randstruktur (50) die Ausbringmengen der Teilbreiten der Verteilvorrichtung (30) geregelt werden und/oder dass in Abhängigkeit der erfassten Ausrichtung und der vorhandenen Randstruktur (50) verschiedene Spritzmuster erzeugt werden.

23. Verfahren nach einem der Ansprüche 15 bis 22, **dadurch gekennzeichnet, dass** die Verfahrgeschwindigkeit des zumindest einen Stellglieds (40) in Abhängigkeit der Fahrgeschwindigkeit und/oder der Ausbringmenge und/oder der aktuellen Ausrichtung vergrößert oder verringert wird.

24. Verfahren nach einem der Ansprüche 15 bis 23, **dadurch gekennzeichnet, dass** die Verteilvorrichtung (30) quer zur Fahrrichtung (28) verschwenkt werden kann, wobei ein Verschwenken auf Basis einer vorhandenen Randstruktur (50) erfolgt.

## Claims

1. An agricultural distribution machine (10), with at least one frame (18), one storage hopper (24) or a plurality of storage hoppers, and a distribution apparatus (30) for spreading liquids and/or granular or granulated materials, wherein the distribution apparatus (30) is arranged to be movable on the frame (18) and is subdivided into a plurality of linkage segments (32), which are arranged to be pivotable relative to one another and/or relative to the frame (18) about upright axles (36),
wherein the distribution machine (10) moreover comprises at least one carriage having at least two wheels (12) and/or a towing device (54), wherein the wheels (12) and/or the towing device (54) are arranged to be pivotable or steerable relative to the frame (18) about upright axles, wherein in each case at least one motorised actuator (40) that is activable by an electronic adjustment device (42) is provided for the pivoting or steering,
wherein sensors (60) for the detection and transmission of an actual value with respect to the alignment of the distribution apparatus (30) and/or of the linkage segments (32) and/or of the upright axles and/or of the carriage and/or of the towing device (54) and/or of the actuators (40) are assigned to the distribution apparatus (30) and/or to the linkage segments (32) and/or to the upright axles and/or to the carriage and/or to the towing device (54) and/or to the actuators (40),
wherein contour detection devices (58) assigned for the detection and/or evaluation of a boundary structure (50) of an area to be tilled and/or traversed by the agricultural distribution machine (10) are assigned to the distribution machine (10) and/or in communication with the adjustment device (42), wherein a laser scanner and/or a camera and/or a camera system and/or a radar sensor are used as a contour detection device (58), and/or wherein a boundary structure (50) is calculated by a control program stored in the adjustment device (42) on the basis of a detected curve radius,
and wherein lane detection devices (74) assigned for the detection and/or evaluation of a lane (56) are assigned to the distribution machine (10) and/or in communication with the adjustment device (42),
**characterised in that** an activation of the motorised actuators (40) is carried out based on a present boundary structure (50) and on a present lane (56) in such a manner that the linkage segments (32) and/or the distribution apparatus (30) have an at least largely parallel and/or perpendicular alignment to the boundary structure (50).

2. The agricultural distribution machine according to claim 1, **characterised in that** the at least one motorised actuator (40) of the carriage and/or of the towing device (54) are activated in such a manner that the wheels (12) follow a lane (56).

3. The agricultural distribution machine according to claim 1 or 2, **characterised in that** an angle sensor for the detection of the alignment of the distribution machine (10) is arranged between a towing vehicle (46) and the distribution machine (10), and/or **in that** the distribution machine (10) has steering angle sensors (60), and/or **in that** at least one gyroscope is assigned to the distribution machine (10), and/or **in that** at least one acceleration sensor is assigned to the distribution machine (10).

4. The agricultural distribution machine according to one of the previous claims, **characterised in that** a calculation for the activation of the at least two motorised actuators (40) is carried out by a control program stored in the adjustment device (42) in consideration of the actual values of the alignment and of the present boundary structure (50) as well as in consideration of the desired and/or present lane (56).

5. The agricultural distribution machine according to claim 4, **characterised in that** a calculation for the activation of the at least one motorised actuator (40) of the carriage or of the at least one motorised actuator (40) of the distribution apparatus (30) and/or of the linkage segments (32) thereof is carried out by a control program stored in the adjustment device (42) in consideration of the driving movement and the driving speed of the distribution machine (10).

6. The agricultural distribution machine according to one of the previous claims, **characterised in that** this machine is configured as a self-propelled distribution machine (10) or as a distribution machine (10) towed by a towing vehicle (46) or as an autonomous distribution machine (10).

7. The agricultural distribution machine according to claim 6, **characterised in that** an automated activation of the steerage of a towing vehicle (46) and/or of a self-propelled distribution machine (10) and/or of an autonomous distribution machine (10) is carried out on the basis of the present boundary structure (50) and/or on the basis of the desired lane (56).

8. The agricultural distribution machine according to claim 6, **characterised in that** a display on required steering movements of a towing vehicle (46) or of a self-propelled distribution machine (10) is output on the basis of the present boundary structure (50) and/or on the basis of the desired lane (56).

9. The agricultural distribution machine according to one of the previous claims, **characterised in that** a parallel and/or perpendicular alignment have a definable offset.

10. The agricultural distribution machine according to one of the previous claims, **characterised in that** a GPS system is applicable for use as a contour detection device (58), and/or **in that** maps of the particular field are stored in the adjustment device (42), and/or **in that** the adjustment device (42) reads out the particular boundary structures (50) from a database.

11. The agricultural distribution machine according to one of the previous claims, **characterised in that** the lane detection device (74) is configured as a laser scanner and/or as a camera and/or as a camera system and/or as a radar sensor, and/or **in that** the lane detection device (74) is configured as a GPS system, and/or **in that** the adjustment device (42) reads out the particular lane (56) from a database, and/or **in that** a lane (56) is calculated by a control program stored in the adjustment device (42) on the basis of a detected curve radius.

12. The agricultural distribution machine according to one of the previous claims, **characterised in that** an activation of the partial widths of the distribution apparatus (30) is carried out based on a detected alignment of the linkage segments (32) and/or of the distribution apparatus (30) and a present boundary structure (50), and/or **in that** the spreading quantities of the partial widths of the distribution apparatus (30) are adjusted based on the detected alignment and the present boundary structure (50), and/or **in that** different spray patterns are generated based on the detected alignment and the present boundary structure (50).

13. The agricultural distribution machine according to one of the previous claims, **characterised in that** the movement speed of the at least one actuator (40) is increased or reduced based on the driving speed and/or on the spreading quantity and/or on the current alignment.

14. The agricultural distribution machine according to one of the previous claims, **characterised in that** the distribution apparatus (30) is pivotable transverse to the driving direction (28), wherein a pivoting is carried out based on a present boundary structure (50).

15. A method for the control and or adjustment of a distribution machine (10), with at least one frame (18), one storage hopper (24) or a plurality of storage hoppers (24), and a distribution apparatus (30) for spreading liquids and/or granular or granulated materials, wherein the distribution apparatus (30) is arranged to be movable on the frame (18) and is subdivided into a plurality of linkage segments (32), which are arranged to be pivotable relative to one another and/or relative to the frame (18) about upright axles, moreover comprising at least one carriage having at least two wheels (12) and/or a towing device (54), wherein the wheels (12) and/or the towing device (54) are arranged to be pivotable or steerable relative to the frame (18) about upright axles, wherein in each case at least one motorised actuator (40) that is activable by an electronic adjustment device (42) is provided for the pivoting or steering,
**characterised by** the method steps:
- detection of an actual value with respect to the alignment of the linkage segments (32) and/or of the distribution apparatus (30) and/or of the wheels (12) and/or of the towing device (54) by sensors (60) assigned to these and/or to the upright axles (36) and/or to the actuators (40),
- detection and evaluation of a boundary structure (50) of an area to be tilled and/or traversed by the agricultural distribution machine (10) by contour detection devices (58) assigned to the distribution machine (10) and/or in communication with the adjustment device (42), wherein a laser scanner and/or a camera and/or a camera system and/or a radar sensor are used as a contour detection device (58), and/or wherein a boundary structure (50) is calculated by a control program stored in the adjustment device (42) on the basis of a detected curve radius,
- detection and/or evaluation of a lane (56) by lane detection devices (74) assigned to the distribution machine (10) and/or in communication with the adjustment device (42),
- activation of the motorised actuators (40) based on a present boundary structure (50) and on a present lane (56) in such a manner that the linkage segments (32) and/or the distribution apparatus (30) have an at least largely parallel and/or perpendicular alignment to the boundary structure (50).

16. The method according to claim 15, **characterised in that** the at least one motorised actuator (40) of the carriage and/or of the towing device (54) is activated in such a manner that the wheels (12) follow a lane (56).

17. The method according to claim 15 or 16, **characterised in that** an angle sensor for the detection of the alignment of the distribution machine (10) is arranged between a towing vehicle (46) and the distribution machine (10), and/or **in that** the distribution machine (10) has steering angle sensors (60), and/or **in that** at least one gyroscope is assigned to the distribution machine (10), and/or **in that** at least one acceleration sensor is assigned to the distribution machine (10).

18. The method according to one of the claims 15 to 17, **characterised in that** a calculation for the activation of the at least two motorised actuators (40) is carried out by a control program stored in the adjustment device (42) in consideration of the actual values of the alignment and of the present boundary structure (50) as well as in consideration of the desired lane (56).

19. The method according to one of the claims 15 to 18, **characterised in that** a calculation for the activation of the at least one motorised actuator (40) of the carriage or of the at least one motorised actuator (40) of the distribution apparatus (30) and/or of the linkage segments (32) thereof is carried out by a control program stored in the adjustment device (42) in consideration of the driving movement and the driving speed of the distribution machine (10).

20. The method according to one of the claims 15 to 19, **characterised in that** an automated activation of the steerage of a towing vehicle (46) and/or of a self-propelled distribution machine (10) and/or of an autonomous distribution machine (10) is carried out on the basis of the present boundary structure (50) and/or on the basis of the desired lane (56).

21. The method according to one of the claims 15 to 20, **characterised in that** a display on required steering movements of a towing vehicle (46) or of a self-propelled distribution machine (10) is output on the basis of the present boundary structure (50) and/or on the basis of the desired lane (56).

22. The method according to one of the claims 15 to 21, **characterised in that** an activation of the partial widths of the distribution apparatus (30) is carried out based on a detected alignment of the linkage segments (32) and/or of the distribution apparatus (30) and a present boundary structure (50), and/or **in that** the spreading quantities of the partial widths of the distribution apparatus (30) are adjusted based on the detected alignment and the present boundary structure (50), and/or **in that** different spray patterns are generated based on the detected alignment and the present boundary structure (50).

23. The method according to one of the claims 15 to 22, **characterised in that** the movement speed of the at least one actuator (40) is increased or reduced based on the driving speed and/or on the spreading quantity and/or on the current alignment.

24. The method according to one of the claims 15 to 23, **characterised in that** the distribution apparatus (30) can be pivoted transverse to the driving direction (28), wherein a pivoting is carried out based on a present boundary structure (50).

## Revendications

1. Épandeur agricole (10) doté d'au moins un châssis (18), d'un réservoir (24) ou de plusieurs réservoirs (24) et d'un dispositif d'épandage (30) destiné à l'épandage de liquides et/ou de matières granuleuses ou granulées, ledit dispositif d'épandage (30) étant agencé de manière mobile sur le châssis (18) et étant divisé en plusieurs segments de rampe (32) qui sont agencés de manière pivotante les uns par rapport aux autres et/ou par rapport au châssis (18) par l'intermédiaire d'axes verticaux (36),
ledit épandeur (10) comprenant en outre au moins un train de roulement présentant au moins deux roues (12), et/ou un dispositif de traction (54), lesdites roues (12) et/ou ledit dispositif de traction (54) étant agencés de manière à pouvoir pivoter ou être dirigés par rapport au châssis (18) par l'intermédiaire d'axes verticaux, au moins un actionneur (40) motorisé pouvant être commandé par un dispositif de régulation électronique (42) étant prévu pour le pivotement ou la direction,
des capteurs (60) étant associés au dispositif d'épandage (30) et/ou aux segments de rampe (32) et/ou aux axes verticaux (36) et/ou au train de roulement et/ou au dispositif de traction (54) et/ou aux actionneurs (40) pour détecter et transmettre une valeur réelle relative à l'orientation du dispositif d'épandage (30) et/ou des segments de rampe (32) et/ou des axes verticaux et/ou du train de roulement et/ou du dispositif de traction (54) et/ou des actionneurs (40),
des dispositifs de détection de contours (58) étant associés à l'épandeur (10) et/ou en liaison avec le dispositif de régulation (42) pour détecter et/ou évaluer une structure périphérique (50) d'une surface à traiter et/ou à traverser par l'épandeur agricole (10), un scanner laser et/ou une caméra et/ou un système de caméra et/ou un capteur radar étant utilisés comme dispositif de détermination de contours (58), et/ou une structure périphérique (50) étant calculée à l'aide d'un rayon de courbure déterminé au moyen d'un programme de commande mémorisé dans le dispositif de régulation (42),
et des dispositifs de détermination de voie (74) associés à l'épandeur (10) et/ou en liaison avec le dispositif de régulation (42) étant associés pour détecter et/ou évaluer une voie de circulation (56),
**caractérisé en ce qu'**une commande des actionneurs motorisés (40) s'effectue en fonction d'une structure périphérique (50) existante et d'une voie de circulation existante (56) de telle sorte que les segments de rampe (32) et/ou le dispositif d'épandage (30) présentent une orientation au moins largement parallèle et/ou perpendiculaire à la structure périphérique (50).

2. Épandeur agricole selon la revendication 1, **caractérisé en ce que** ledit au moins un actionneur motorisé (40) du train de roulement et/ou du dispositif de traction (54) est commandé de telle sorte que les roues (12) suivent une voie de circulation (56).

3. Épandeur agricole selon la revendication 1 ou 2, **caractérisé en ce qu'**un capteur d'angle est agencé entre un véhicule de traction (46) et l'épandeur (10) pour détecter l'orientation de l'épandeur (10), et/ou que ledit épandeur (10) présente des capteurs d'angle de braquage (60), et/ou qu'au moins un gyroscope est associé à l'épandeur (10), et/ou qu'au moins un capteur d'accélération est associé à l'épandeur (10).

4. Épandeur agricole selon l'une quelconque des revendications précédentes, **caractérisé en ce qu'**un calcul pour commander lesdits au moins deux actionneurs motorisés (40) s'effectue au moyen d'un programme de commande mémorisé dans le dispositif de régulation (42), lequel programme tient compte des valeurs réelles de l'orientation et de la structure périphérique (50) existante ainsi que de la voie de circulation (56) souhaitée et/ou existante.

5. Épandeur agricole selon la revendication 4, **caractérisé en ce qu'**un programme de commande mémorisé dans le dispositif de régulation (42) permet de calculer la commande dudit au moins un actionneur (40) motorisé du train de roulement ou dudit au moins un actionneur (40) du dispositif d'épandage (30) et/ou de ses segments de rampe (32) en tenant compte du mouvement de marche et de la vitesse de marche de l'épandeur (10).

6. Épandeur agricole selon l'une quelconque des revendications précédentes, **caractérisé en ce qu'**il est réalisé comme épandeur agricole (10) automoteur ou comme épandeur (10) tracté à l'aide d'un véhicule de traction (46) ou comme épandeur (10) autonome.

7. Épandeur agricole selon la revendication 6, **caractérisé en ce qu'**une commande automatisée de la direction d'un véhicule de traction (46) et/ou d'un épandeur (10) automoteur et/ou d'un épandeur (10) autonome s'effectue à l'aide de la structure périphérique (50) existante et/ou de la voie de circulation (56) souhaitée.

8. Épandeur agricole selon la revendication 6, **caractérisé en ce qu'**un affichage des mouvements de direction nécessaires d'un véhicule de traction (46) ou d'un épandeur (10) automoteur s'effectue à l'aide de la structure périphérique (50) existante et/ou de la voie de circulation (56) désirée.

9. Épandeur agricole selon l'une quelconque des revendications précédentes, **caractérisé en ce qu'**une orientation parallèle et/ou perpendiculaire présentent un décalage définissable.

10. Épandeur agricole selon l'une quelconque des revendications précédentes, **caractérisé en ce qu'**un système GPS peut être utilisé comme dispositif de détermination de contour (58) et/ou que des cartes des différentes surfaces arables sont mémorisées dans le dispositif de régulation (42), et/ou que ledit dispositif de régulation (42) lit les structures périphériques (50) respectives à partir d'une banque de données.

11. Épandeur agricole selon l'une quelconque des revendications précédentes, **caractérisé en ce que** le dispositif de détermination de voie (74) est réalisé comme scanner laser et/ou comme caméra et/ou comme système de caméra et/ou comme capteur radar, et/ou que le dispositif de détermination de voie (74) est réalisé comme système GPS, et/ou que le dispositif de régulation (42) lit la voie (56) respective à partir d'une banque de données et/ou qu'une voie (56) est calculée à l'aide d'un rayon de courbure déterminé au moyen d'un programme de commande mémorisé dans le dispositif de régulation (42).

12. Épandeur agricole selon l'une quelconque des revendications précédentes, **caractérisé en ce qu'**une commande des largeurs partielles du dispositif d'épandage (30) s'effectue en fonction d'une direction détectée des segments de rampe (32) et/ou du dispositif d'épandage (30), et en fonction d'une structure périphérique (50) existante, et/ou que les quantités d'épandage des largeurs partielles du dispositif d'épandage (30) sont réglées en fonction de l'orientation détectée et de la structure périphérique (50) existante, et/ou que des modèles de pulvérisation différents sont générés en fonction de l'orientation détectée et de la structure périphérique (50) existante.

13. Épandeur agricole selon l'une quelconque des revendications précédentes, **caractérisé en ce que** la vitesse de déplacement dudit au moins un actionneur (40) est augmentée ou diminuée en fonction de la vitesse de marche et/ou de la quantité d'épandage et/ou de l'orientation actuelle.

14. Épandeur agricole selon l'une quelconque des revendications précédentes, **caractérisé en ce que** le dispositif d'épandage (30) peut être pivoté à la perpendiculaire du sens de marche (28), un pivotement s'effectuant sur la base d'une structure périphérique (50) existante.

15. Procédé de commande et/ou de réglage d'un épandeur (10) doté d'au moins un châssis (18), d'un réservoir (24) ou de plusieurs réservoirs (24) et d'un dispositif d'épandage (30) destiné à l'épandage de liquides et/ou de matières granuleuses ou granulées, ledit dispositif d'épandage (30) étant agencé de manière mobile au châssis (18) et divisé en plusieurs segments de rampe (32) qui sont agencés de manière pivotante les uns par rapport aux autres et/ou par rapport au châssis (18) par l'intermédiaire d'axes verticaux, comprenant en outre au moins un train de roulement présentant au moins deux roues (12) et/ou un dispositif de traction (54), lesdites roues (12) et/ou le dispositif de traction (54) étant agencés de manière pivotante ou pouvant être dirigés par rapport au châssis (18) par l'intermédiaire d'axes verticaux, au moins un actionneur motorisé (40) pouvant être commandé par un dispositif de régulation (42) électronique étant respectivement prévu pour le pivotement ou pour la direction
**caractérisé par** les étapes de procédé :
- détection d'une valeur réelle relative à l'orientation des segments de rampe (32) et/ou du dispositif d'épandage (30) et/ou des roues (12) et/ou du dispositif de traction (54) au moyen de ceux-ci et/ou des axes verticaux (36) et/ou des capteurs (60) associés aux actionneurs (40),
- détection et évaluation d'une structure périphérique (50) d'une surface à travailler et/ou à traverser par ledit épandeur agricole (10) au moyen de dispositifs de détermination de contour (58) associés audit épandeur (10) et/ou en liaison avec le dispositif de régulation (42), un scanner laser et/ou une caméra et/ou un système de caméra et/ou un capteur radar étant utilisés comme dispositif de détermination de contour (58), et/ou une structure périphérique (50) étant calculée à l'aide d'un rayon de courbure déterminé au moyen d'un programme de commande mémorisé dans le dispositif de régulation (42),
- détection et/ou évaluation d'une voie de circulation (56) au moyen des dispositifs de détermination de voie (74) associés à l'épandeur (10) et/ou en liaison avec le dispositif de régulation (42),
- commande des actionneurs motorisés (40) en fonction d'une structure périphérique existante (50) et d'une voie de circulation existante (56) de telle sorte que les segments de rampe (32) et/ou le dispositif d'épandage (30) présentent une orientation au moins largement parallèle et/ou perpendiculaire à la structure périphérique (50).

16. Procédé selon la revendication 15, **caractérisé en ce que** ledit au moins un actionneur motorisé (40) du train de roulement et/ou du dispositif de traction (54) est commandé de telle sorte que les roues (12) suivent une voie de circulation (56).

17. Procédé selon la revendication 15 ou 16, **caractérisé en ce que** pour détecter l'orientation de l'épandeur (10), un capteur angulaire est agencé entre un véhicule de traction (46) et l'épandeur (10) et/ou ledit épandeur (10) présente des capteurs d'angle de braquage (60) et/ou qu'au moins un gyroscope est associé à l'épandeur (10) et/ou qu'au moins un capteur d'accélération est associé à l'épandeur (10).

18. Épandeur agricole selon l'une quelconque des revendications 15 à 17, **caractérisé en ce qu'**un calcul pour commander lesdits au moins deux actionneurs motorisés (40) s'effectue au moyen d'un programme de commande mémorisé dans le dispositif de régulation (42), les valeurs réelles de l'orientation et de la structure périphérique (50) existante ainsi que de la voie de circulation (56) souhaitée étant prises en compte.

19. Épandeur agricole selon l'une quelconque des revendications 15 à 18, **caractérisé en ce qu'**un programme de commande mémorisé dans le moyen de régulation (42) permet d'effectuer un calcul pour la commande dudit au moins un actionneur motorisé (40) du train de roulement ou dudit au moins un actionneur motorisé (40) du dispositif d'épandage (30) et/ou de ses segments de rampe (32) en tenant compte du mouvement de marche et de la vitesse de marche de l'épandeur (10).

20. Épandeur agricole selon l'une quelconque des revendications 15 à 19, **caractérisé en ce qu'**une commande automatisée de la direction d'un véhicule de traction (46) et/ou d'un épandeur (10) automoteur et/ou d'un épandeur (10) autonome s'effectue à l'aide de la structure périphérique (50) existante et/ou de la voie de circulation (56) souhaitée.

21. Procédé selon l'une quelconque des revendications 15 à 20, **caractérisé en ce qu'**un affichage des mouvements de direction nécessaires d'un véhicule de traction (46) ou d'un épandeur (10) automoteur s'effectue à l'aide de la structure périphérique (50) existante et/ou de la voie de circulation (56) désirée.

22. Épandeur agricole selon l'une quelconque des revendications 15 à 21, **caractérisé en ce qu'**une commande des largeurs partielles du dispositif d'épandage (30) s'effectue en fonction d'une orientation détectée des segments de rampe (32) et/ou du dispositif d'épandage (30), et en fonction d'une structure périphérique (50) existante, et/ou que les quantités d'épandage des largeurs partielles du dispositif d'épandage (30) sont réglées en fonction de l'orientation détectée et de la structure périphérique (50) existante, et/ou que des modèles de pulvérisation différents sont générés en fonction de l'orientation détectée et de la structure périphérique (50) existante.

23. Épandeur agricole selon l'une quelconque des revendications 15 à 22, **caractérisé en ce que** la vitesse de déplacement dudit au moins un actionneur (40) est augmentée ou diminuée en fonction de la vitesse de marche et/ou de la quantité d'épandage et/ou de l'orientation actuelle.

24. Épandeur agricole selon l'une quelconque des revendications 15 à 23, **caractérisé en ce que** le dispositif d'épandage (30) peut être pivoté à la perpendiculaire du sens de marche (28), un pivotement s'effectuant sur la base d'une structure périphérique (50) existante.
